# EUROPEAN PATENT APPLICATION

(11) **EP 4 450 526 A1**
(43) Date of publication of application: **23.10.2024**
(21) Application number: 22907519.7
(22) Date of filing: 15.12.2022
(51) Int. Cl.: C08F 8/04, C08L 23/00, C08L 53/02, C08L 101/00

(54) **MODIFIED HYDROGENATED BLOCK COPOLYMER AND RESIN COMPOSITION**

(30) Priority: 17.12.2021 JP 2021205330
(71) Applicant: Kuraray Co., Ltd., Kurashiki-shi, Okayama 710-0801 (JP)
(72) Inventor: KATO, Masahiro, Kamisu-shi, Ibaraki 314-0197 (JP); SENDA, Yasushi, Kamisu-shi, Ibaraki 314-0197 (JP); SATANI, Ryo, Kamisu-shi, Ibaraki 314-0197 (JP)
(74) Representative: Müller-Boré & Partner Patentanwälte PartG mbB
(86) International application number: PCT/JP2022/046282
(87) International publication number: WO 2023/112996

(57) **Abstract**

Provided is a modified product of a hydrogenated product of a block copolymer that can be added to obtain a resin composition having an excellent balance of mechanical properties such as tensile strength, tensile strain at break, and impact resistance. A modified hydrogenated product of a block copolymer including a polymer block containing a structural unit derived from an aromatic vinyl compound and a polymer block containing a structural unit derived from a conjugated diene compound, in which the conjugated diene compound contains isoprene and a conjugated diene compound other than isoprene; the polymer block has a vinyl bonding amount of 30 mol% or less; the modified hydrogenated product has one, or two or more functional groups selected from an alkoxysilyl group, a carboxy group, an amino group, a hydroxy group, an epoxy group, and an acid anhydride-derived group, and has a peak top intensity of loss tangent of 0.95 or less and a melt flow rate (MFR) of 0.5 g/10 min or more.

## Description

### Technical Field

The present invention relates to a modified hydrogenated block copolymer and a resin composition, and particularly to a modified hydrogenated block copolymer and a resin composition containing the modified hydrogenated block copolymer.

### Background Art

It is known that a modified product, in which a functional group having reactivity has been introduced by modifying a block copolymer having a polymer block containing a structural unit derived from an aromatic vinyl compound and a polymer block containing a structural unit derived from a conjugated diene compound, or a hydrogenated product thereof can be used as a compatibilizer for compatibilizing a polar resin and a non-polar resin.

For example, PTLs 1 to 4 disclose that in a resin composition in which a polyolefin resin, a polyamide resin, and a compatibilizer have been blended, a modified product of an olefin-based elastomer or a styrene-based elastomer is used as the compatibilizer. Among these patent literatures, PTLs 1, 2, and 4 describe that examples of the styrene-based elastomer include a block copolymer of an aromatic vinyl compound and a conjugated diene compound, and a hydrogenated product thereof.

Further, PTL 5 describes a blow molding composition containing a mixture of a polyamide resin and a polyolefin resin containing a modified polyolefin, and describes that the polyolefin resin may include a polyolefin resin and a modified polyolefin.

### Citation List

### Patent Literature

PTL 1: WO 2017/169814 A1
PTL 2: JP 2013-147645 A
PTL 3: JP 2013-147648 A
PTL 4: WO 2017/094738 A1
PTL 5 : JPH 6-234897 A

### Summary of Invention

### Technical Problem

As the use of the modified product of the block copolymer or the hydrogenated product thereof becomes widespread, in order to be suitable for various uses, there is a need for a modified product of a block copolymer or a hydrogenated product thereof as a compatibilizer that can better compatibilize a polar resin and a non-polar resin and improve the properties of the resulting resin composition.

For example, for packaging containers, a polyolefin-based resin or a laminate of a polyolefin-based resin and a polar resin are often used to generally improve barrier properties and strength. It is desirable to recycle such packaging containers from the perspective of reducing waste after use and aiming for a recycling-oriented society by reducing and effectively utilizing fossil resources.

However, it is a fact that there is still room for consideration of a resin composition containing a polyolefin-based resin and a polar resin from the viewpoint of various physical properties thereof.

Therefore, an object of the present invention is to provide a modified product of a hydrogenated product of a block copolymer that can be added to obtain a resin composition having an excellent balance of mechanical properties such as tensile strength, tensile strain at break, and impact resistance.

Another object of the present invention is to provide the resin composition having the above-mentioned excellent balance of mechanical properties.

### Solution to Problem

The present inventors have found that the above objects can be achieved by a modified hydrogenated product of a specific block copolymer including a polymer block containing a structural unit derived from an aromatic vinyl compound and a polymer block containing a structural unit derived from a conjugated diene compound, and have completed the present invention.

The present invention relates to the following [1] to [17].
[1] A modified hydrogenated product (A) of a block copolymer including a polymer block (A-1) containing a structural unit derived from an aromatic vinyl compound and a polymer block (A-2) containing a structural unit derived from a conjugated diene compound, in which
   the conjugated diene compound contains isoprene and a conjugated diene compound other than isoprene,
   the polymer block (A-2) has a vinyl bonding amount of 30 mol% or less,
   the modified hydrogenated product has one, or two or more functional groups selected from an alkoxysilyl group, a carboxy group, an amino group, a hydroxy group, an epoxy group, and an acid anhydride-derived group,
   the modified hydrogenated product has a peak top intensity of loss tangent (tan δ) of 0.95 or less measured in accordance with JIS K7244-10:2005 under conditions of a strain amount of 0.1%, a frequency of 1Hz, a measurement temperature of -70°C to +120°C, and a heating rate of 3°C/min,
   and the modified hydrogenated product has a melt flow rate (MFR) of 0.5 to 15 g/10 min measured in accordance with JIS K7210:2014 under conditions of a temperature of 230°C and a load of 21N.
[2] The modified hydrogenated product (A) according to the above [1], having a weight average molecular weight of 10,000 to 400,000.
[3] The modified hydrogenated product (A) according to the above [1] or [2], in which the polymer block (A-2) has a hydrogenation rate of 80 mol% or more.
[4] The modified hydrogenated product (A) according to any one of the above [1] to [3], wherein a content of the functional group is 0.1 to 5.0 phr based on the modified hydrogenated product (A).
[5] The modified hydrogenated product (A) according to any one of the above [1] to [4], having a group derived from maleic anhydride.
[6] The modified hydrogenated product (A) according to any one of the above [1] to [5], in which the block copolymer further has a polymer block (A-3) containing a structural unit derived from isoprene, and
   the block copolymer has a bonding form of a tetra block copolymer represented by A-B-A-C, when the polymer block (A-1) is represented by A, the polymer block (A-2) is represented by B, and the polymer block (A-3) is represented by C.
[7] The modified hydrogenated product (A) according to the above [6], in which the polymer block (A-3) in the block copolymer has a proportion of 40% by mass or less of the entire block copolymer.
[8] The modified hydrogenated product (A) according to the above [6] or [7], in which the polymer block (A-3) has a vinyl bonding amount of 2 to 90 mol%.
[9] The modified hydrogenated product (A) according to any one of the above [6] to [8], in which a content of structural units derived from isoprene in the polymer block (A-3) is 40% by mass or more based on a total mass of the polymer block (A-3).
[10] The modified hydrogenated product (A) according to any one of the above [6] to [9], in which the polymer block (A-3) in the modified hydrogenated product (A) has a hydrogenation rate of 80 mol% or more.
[11] A pellet containing the modified hydrogenated product (A) according to any one of the above [1] to [10].
[12] A resin composition containing the modified hydrogenated product (A) according to any one of the above [1] to [10] and a polyolefin-based resin (B).
[13] The resin composition according to the above [12], in which the polyolefin-based resin (B) is at least one resin selected from the group consisting of polypropylene, polyethylene, polymethylpentene, ethylene vinyl acetate copolymer, homopolymer or copolymer of α-olefin, and copolymer of propylene and/or ethylene with α-olefin.
[14] The resin composition according to the above [12] or [13], in which the modified hydrogenated product (A) in the resin composition has a content of 1 to 30% by mass.
[15] The resin composition according to any one of the above [12] to [14], further containing a polar resin (C).
[16] The resin composition according to the above [15], in which the polar resin (C) is at least one resin selected from the group consisting of a polyamide-based resin, a polyvinyl alcohol-based resin, a polyester-based resin, a polyphenylene ether-based resin, a polyphenylene sulfide-based resin, and a polycarbonate-based resin.
[17] The resin composition according to the above [15] or [16], in which, when a mass of the polyolefin-based resin (B) in the resin composition is X and a mass of the polar resin (C) in the resin composition is Y, X/Y is 90/10 to 10/90.

### Advantageous Effects of Invention

According to the present invention, it is possible to provide a modified product of a hydrogenated product of a block copolymer that can be added to obtain a resin composition having an excellent balance of mechanical properties such as tensile strength, tensile strain at break, and impact resistance, and a resin composition containing the modified product.

### Brief Description of Drawings

Fig. 1 is a transmission electron microscope (TEM) photograph for observing the morphology of a resin composition 1 of Example 2-1.
Fig. 2 is a transmission electron microscope (TEM) photograph for observing the morphology of a resin composition 3 of Example 2-3.
Fig. 3 is a transmission electron microscope (TEM) photograph for observing the morphology of a resin composition 4 of Example 2-4.
Fig. 4 is a diagram for explaining flame retardancy evaluation.

### Description of Embodiments

Embodiments of the present invention will be described below.

The present invention also includes embodiments in which items described in the present specification are arbitrarily selected or in arbitrary combinations.

In the present specification, preferred provisions can be arbitrarily selected, and combinations of preferred provisions can be said to be more preferred.

In the present specification, an expression "XX to YY" means "XX or more and YY or less".

In the present specification, lower and upper limits described in stages for preferred numerical ranges (for example, ranges of content) can be independently combined, respectively. For example, from a description "preferably 10 to 90, more preferably 30 to 60", the "preferable lower limit (10)" and the "more preferable upper limit (60)" may be combined to have "10 to 60".

In the present specification, "~ unit" (herein, "~" indicates a monomer) means "a structural unit derived from ~", and for example, a "propylene unit" means a structural unit derived from propylene".

In the present specification, an expression "BB mainly composed of AA" means that the BB contains at least more than 50% by mass of AA.

### [Modified Hydrogenated Product (A)]

The modified hydrogenated product (A) according to an embodiment of the present invention is a modified hydrogenated product of a block copolymer including a polymer block (A-1) containing a structural unit derived from an aromatic vinyl compound and a polymer block (A-2) containing a structural unit derived from a conjugated diene compound, in which
the conjugated diene compound contains isoprene and a conjugated diene compound other than isoprene,
the polymer block (A-2) has a vinyl bonding amount of 30 mol% or less,
the modified hydrogenated product has one, or two or more functional groups selected from an alkoxysilyl group, a carboxy group, an amino group, a hydroxy group, an epoxy group, and an acid anhydride-derived group,
the modified hydrogenated product has a peak top intensity of loss tangent (tan δ) of 0.95 or less measured in accordance with JIS K7244-10:2005 under conditions of a strain amount of 0.1%, a frequency of 1Hz, a measurement temperature of -70°C to +120°C, and a heating rate of 3°C/min,
and the modified hydrogenated product has a melt flow rate (MFR) of 0.5 /10 min or more measured in accordance with JIS K7210:2014 under conditions of a temperature of 230°C and a load of 21N.

In the present specification, "a group derived from an acid anhydride" means a group having a structure obtained by dehydration condensation of two carboxylic acid groups possessed by an acid anhydride, and when the acid anhydride is maleic anhydride, it is, for example, a group having a structure shown below.

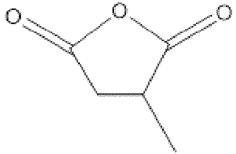

Hereinafter, the above block copolymer may be represented by a reference sign (A0), and a hydrogenated product of the block copolymer (A0) may be represented by a reference sign (A1). Further, the hydrogenated product of the block copolymer (A0) may be referred to as a "hydrogenated block copolymer (A1)".

The modified hydrogenated product (A) is a modified product of the hydrogenated product (A1) of the block copolymer (A0), or a hydrogenated product of a modified product of the block copolymer (A0).

By using the block copolymer (A0) as a raw material for the modified hydrogenated product (A), mechanical properties such as impact resistance can be imparted to the resin composition described later. Furthermore, by hydrogenating the block copolymer, it becomes easier to improve thermal stability.

Moreover, when the vinyl bonding amount of the polymer block (A-2) (that is, the content of 3,4-bond units and 1,2-bond units in the polymer block (A-2)) is 30 mol% or less, mechanical properties such as tensile strength and tensile strain at break can be improved. Therefore, the properties such as flexibility and impact resistance of the modified hydrogenated product (A) are easily exhibited in the resin composition described later.

In addition, since a predetermined functional group is introduced through modification, the compatibility in the resin composition described later can be improved, and the resin composition also has high adhesiveness to metals and various other materials.

Next, constituent components of the block copolymer (A0) or the hydrogenated product (A1) thereof for obtaining the modified hydrogenated product (A), usage ratios thereof, characteristics, etc. will be explained. Although these are substances before modification, the polymer block (A-1) and the polymer block (A-2) included in the block copolymer (A0) and the hydrogenated block copolymer (A1) are also included in the modified hydrogenated product (A), and the main skeletons thereof do not change even if they are modified. Therefore, the following explanation regarding the polymer block (A-1) and the polymer block (A-2) is also common to the modified hydrogenated product (A).

### (Block Copolymer (A0))

The block copolymer (A0) has the polymer block (A-1) containing a structural unit derived from an aromatic vinyl compound and the polymer block (A-2) containing a structural unit derived from a conjugated diene compound. The polymer block (A-1) and the polymer block (A-2) will be explained below.

### (Configuration of Polymer Block (A-1))

The polymer block (A-1) constituting the block copolymer (A0) preferably has a structural unit derived from an aromatic vinyl compound used as a monomer from the viewpoint of mechanical properties such as heat resistance and impact resistance.

The polymer block (A-1) preferably contains a structural unit derived from an aromatic vinyl compound (hereinafter sometimes abbreviated as "aromatic vinyl compound unit") in an amount of more than 70 mol% in the polymer block (A-1), and from the viewpoint of mechanical properties such as impact resistance, more preferably 80 mol% or more, still more preferably 90 mol% or more, even more preferably 95 mol% or more, and particularly preferably substantially 100 mol%. In other words, the content of the aromatic vinyl compound unit in the polymer block (A-1) is preferably more than 70 mol% and 100 mol% or less.

Examples of the aromatic vinyl compound include styrene, o-methylstyrene, m-methylstyrene, p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, 4-propylstyrene, 4-cyclohexylstyrene, 4-dodecylstyrene, 2,4-diisopropylstyrene, 2-ethyl-4-benzylstyrene, 4-(phenylbutyl)styrene, o-t-butylstyrene, m-t-butylstyrene, p-t-butylstyrene, o-methoxystyrene, m-methoxystyrene, p-methoxystyrene, o-chloromethyl styrene, m-chloromethylstyrene, p-chloromethylstyrene, o-buromomethyl styrene, m-buromomethylstyrene, p-buromomethylstyrene, a styrene derivative substituted by a silyl group, indene, vinylnaphthalene, and N-vinylcarbazole. These aromatic vinyl compounds may be used alone, or two or more kinds thereof may be used. Among these compounds, from the viewpoint of a production cost and a balance of physical properties, styrene, α-methylstyrene, p-methylstyrene, and a mixture thereof are preferred, and styrene is more preferred.

As long as the purpose and effects of the present invention are not disturbed, the polymer block (A-1) may contain a structural unit derived from another unsaturated monomer other than the aromatic vinyl compound (hereinafter sometimes abbreviated as "another unsaturated monomer unit"). However, the content thereof in the polymer block (A-1) is preferably 30 mol% or less, more preferably less than 20 mol%, still more preferably less than 15 mol%, even more preferably less than 10 mol%, further more preferably less than 5 mol%, and particularly preferably 0 mol%. In other words, the content of another unsaturated monomer unit in the polymer block (A-1) is preferably 0 to 30 mol%.

Examples of the other unsaturated monomer include at least one selected from the group consisting of butadiene, isoprene, β-farnesene, 2,3-dimethylbutadiene, 1,3-pentadiene, 1,3-hexadiene, isobutylene, methyl methacrylate, methyl vinyl ether, β-pinene, 8,9-p-menthene, dipentene, methylene norbornene, and 2-methylene tetrahydrofuran. The bonding form in the case where the polymer block (A-1) contains the other unsaturated monomer unit is not particularly limited, and may be any one of random and tapered forms.

The block copolymer (A0) only needs to have at least one polymer block (A-1). When the block copolymer (A0) has two or more polymer blocks (A-1), these polymer blocks (A-1) may be the same or different from each other. In the present specification, "the polymer blocks are different" means that at least one of the monomer units constituting the polymer blocks, the weight average molecular weight, the stereoregularity, and the ratio of each monomer unit and the form of copolymerization (random, tapered, block) when having a plurality of monomer units, is different.

The block copolymer (A0) preferably has two polymer blocks (A-1).

### (Weight Average Molecular Weight of Polymer Block (A-1))

The weight average molecular weight (Mw) of the polymer block (A-1) is, from the viewpoint of moldability and mechanical properties, preferably 2,000 to 60,000, more preferably 3,000 to 50,000, still more preferably 4,000 to 40,000, and even more preferably 5,000 to 30,000.

The weight average molecular weight (Mw) of the polymer block (A-1) can be set within the above range, for example, by adjusting the amount of the aromatic vinyl compound relative to a polymerization initiator used in polymerization.

All of "weight average molecular weight (Mw)" described in the present specification and claims are standard polystyrene equivalent Mw determined by gel permeation chromatography (GPC) measurement, and a detailed measurement method can be based on the method described in Examples. The Mw of each polymer block included in the block copolymer can be determined by measuring a sampled liquid each time the polymerization of each polymer block is completed in a production process. Also, for example, when two types of polymer blocks (A) are represented by "A1" and "A2" and one type of polymer block (B) is represented by "B", in the case of a triblock copolymer having a structure of A1-B-A2, the Mw of the polymer block "A1" and the polymer block "B" can be determined by the above method, and by subtracting the Mw of A1 and B from the Mw of the block copolymer, the Mw of the polymer block "A2" can be determined. In addition, as another method, in the case of a triblock copolymer having the above A1-B-A2 structure, the total Mw of the polymer blocks "A1" and "A2" is calculated from the Mw of the block copolymer and the total content of the polymer blocks "A1" and "A2" confirmed by ¹H-NMR measurement, the Mw of the deactivated first polymer block "A1" by GPC measurement, and by subtracting the Mw of A1, the Mw of the polymer block "A2" can also be determined.

### (Content of Polymer Block (A-1))

The content of the polymer block (A-1) in the block copolymer (A0) (in the case of having a plurality of polymer blocks (A-1), a total content thereof) is preferably 50% by mass or less, more preferably 40% by mass or less, still more preferably 30% by mass or less, and particularly preferably 25% by mass or less.

When the content of the polymer block (A-1) is 50% by mass or less, the block copolymer (A0) or the hydrogenated block copolymer (A1) can have appropriate flexibility. Further, the content of the polymer block (A-1) is preferably 4% by mass or more, more preferably 5% by mass or more, and even more preferably 6% by mass or more. When the content of the polymer block (A-1) is 4% by mass or more, the block copolymer (A0) or the hydrogenated block copolymer (A1) can have mechanical properties such as impact resistance and handling properties such as moldability that are suitable for various uses of the resin composition described later. In other words, the content of the polymer block (A-1) in the block copolymer (A0) or the hydrogenated block copolymer (A1) is preferably 4 to 50% by mass.

The content of the polymer block (A-1) in the block copolymer is a value determined by ¹H-NMR measurement, and more specifically, a value measured according to the method described in Examples.

### (Configuration of Polymer Block (A-2))

The polymer block (A-2) constituting the block copolymer (A0) has a structural unit derived from a conjugated diene compound (hereinafter sometimes referred to as "conjugated diene compound unit") from the viewpoint of flexibility, etc.

The polymer block (A-2) preferably contains 30 mol% or more of a conjugated diene compound unit. In particular, from the viewpoint of flexibility, the polymer block (A-2) more preferably contains 50 mol% or more, still more preferably 65 mol% or more, even more preferably 80 mol% or more, further more preferably 90 mol% or more, and particularly preferably substantially 100 mol% of the conjugated diene compound unit.

From the viewpoint of easily developing excellent strength, the above-mentioned conjugated diene compound contains isoprene and a conjugated diene compound other than isoprene, and preferably contains isoprene and butadiene.

By containing isoprene and a conjugated diene compound other than isoprene, for example, when the modified hydrogenated product (A) of the present invention is made into a composition with a plurality of resins having different properties, a good compatibility effect can be achieved.

Further, as the conjugated diene compound, as described later, a conjugated diene compound other than isoprene and butadiene may be contained. On the other hand, from the viewpoint of easily developing excellent strength, the content of isoprene in the conjugated diene compound is preferably 5% by mass or more, more preferably 10% by mass or more, still more preferably 40% by mass or more, and even more preferably 45% by mass or more.

Further, when the conjugated diene compound is a mixture of butadiene and isoprene, the mixing ratio [isoprene/butadiene] (mass ratio) thereof is, from the viewpoint of impact resistance, especially low-temperature impact resistance, preferably 5/95 to 95/5, more preferably 10/90 to 90/10, still more preferably 40/60 to 70/30, and particularly preferably 45/55 to 65/35. In addition, when the mixing ratio [isoprene/butadiene] is expressed as a molar ratio, it is preferably 5/95 to 95/5, more preferably 10/90 to 90/10, still more preferably 40/60 to 70/30, and particularly preferably 45/55 to 55/45.

In addition to the above-mentioned isoprene and butadiene, examples of the conjugated diene compound include β-farnesene, hexadiene, 2,3-dimethyl-1,3-butadiene, 1,3-pentadiene, and myrcene. The conjugated diene compounds may be used alone, or two or more types thereof may be used.

Furthermore, as long as the purpose and effects of the present invention are not disturbed, the polymer block (A-2) may contain a structural unit derived from another polymerizable monomer other than the conjugated diene compound. In this case, the content of structural units derived from another polymerizable monomer other than the conjugated diene compound in the polymer block (A-2) is preferably less than 70 mol%, more preferably less than 50 mol%, still more preferably less than 35 mol%, and particularly preferably less than 20 mol%. The lower limit value of the content of structural units derived from another polymerizable monomer other than the conjugated diene compound is not particularly limited, and may be 0 mol%, or 5 mol%, or 10 mol%.

Preferred examples of the other polymerizable monomer include at least one compound selected from the group consisting of aromatic vinyl compounds such as styrene, α-methylstyrene, o-methylstyrene, m-methylstyrene, p-methylstyrene, p-t-butylstyrene, 2,4-dimethylstyrene, vinylnaphthalene, and vinylanthracene, methyl methacrylate, methyl vinyl ether, N-vinylcarbazole, β-pinene, 8,9-p-menthene, dipentene, methylene norbornene, 2-methylene tetrahydrofuran, 1,3-cyclopentadiene, 1,3-cyclohexadiene, 1,3-cycloheptadiene, 1,3-cyclooctadiene, and the like. Among these compounds, styrene, α-methylstyrene, and p-methylstyrene are preferred, and styrene is more preferred.

Furthermore, the block copolymer (A0) only needs to have at least one polymer block (A-2). When the block copolymer (A0) has two or more polymer blocks (A-2), these polymer blocks (A-2) may be the same or different from each other. When the polymer block (A-2) has two or more types of structural units, the bonding form thereof may be random, tapered, completely alternating, partially block-like, block, or a combination of two or more of these types.

The bonding form of the conjugated diene compound is not particularly limited as long as it does not impair the purpose and effects of the present invention. For example, when the structural unit constituting the polymer block (A-2) is a mixture unit of isoprene and butadiene, the respective bonding forms of isoprene and butadiene may be, 1,2-bond and 1,4-bond in the case of butadiene, and 1,2-bond, 3,4-bond, and 1,4-bond in the case of isoprene. Only one type of these bonding forms may be present, or two or more types thereof may be present.

In the present specification, the amount of 1,2-bond in the butadiene units in the polymer block (A-2) is referred to as a vinyl bonding amount, the total amount of 1,2-bond and 3,4-bond in the isoprene units in the polymer block (A-2) is referred to as a vinyl bonding amount, the content of vinyl bonding amount in the total bond form of the polymer block (A-2) is sometimes referred to as the "vinyl bonding amount (mol%) of the polymer block (A-2)", and the content of vinyl bonding amount in the entire block copolymer (A0) is sometimes referred to as the "vinyl bonding amount (mol%) of the block copolymer (A0)". The amount of 1,2-bond and the amount of 3,4-bond can be calculated by ¹H-NMR measurement in the same manner as in Examples.

### (Vinyl Bonding Amount in Polymer Block (A-2))

In the block copolymer (A0), the total content of 3,4-bond units and 1,2-bond units (that is, vinyl bonding amount) in the polymer block (A-2) is 30 mol% or less, preferably 25 mol% or less, more preferably 20 mol% or less, and still more preferably 15 mol% or less. When the vinyl bonding amount in the polymer block (A-2) is 30 mol% or less, it is possible to improve the mechanical properties of the resin composition and contribute to the development of low-temperature properties. Further, when the vinyl bonding amount is 25 mol% or less, the low-temperature properties will be better, and as the vinyl bonding amount decreases, the low-temperature properties will tend to improve.

Furthermore, the vinyl bonding amount in the polymer block (A-2) may be 2 mol% or more, or 5 mol% or more.

Here, the vinyl bonding amount is a value determined by ¹H-NMR measurement, and more specifically, a value measured according to the method described in Examples.

### (Weight Average Molecular Weight of Polymer Block (A-2))

Although the weight average molecular weight (Mw) of the polymer block (A-2) is not particularly limited, the total Mw of the polymer block (A-2) included in the block copolymer (A0) before hydrogenation is preferably 10,000 to 200,000, more preferably 20,000 to 180,000, even more preferably 30,000 to 160,000, still more preferably 35,000 to 140,000, and further more preferably 40, 000 to 130,000. When the total weight average molecular weight of the polymer block (A-2) is within the above range, more excellent flexibility can be easily exhibited.

### (Content of Polymer Block (A-2))

The content of the polymer block (A-2) in the block copolymer (A0) is preferably 96% by mass or less, more preferably 95% by mass or less, and even more preferably 94% by mass or less. When the content of the polymer block (A-2) is 96% by mass or less, it becomes easy to produce a modified hydrogenated compound (A) or a resin composition containing the same, which has mechanical characteristics, mechanical properties, and moldability suitable for various uses. Further, the content of the polymer block (A-2) in the block copolymer is preferably 50% by mass or more, more preferably 60% by mass or more, still more preferably 70% by mass or more, and even more preferably 75% by mass or more. When the content of the polymer block (A-2) is 50% by mass or more, the modified hydrogenated product (A) can have excellent flexibility.

### (Other Structural Units in Polymer Block (A-2))

As long as the purpose and effects of the present invention are not disturbed, the polymer block (A-2) may contain a structural unit derived from another polymerizable monomer other than the conjugated diene compound. In this case, the content of structural units derived from another polymerizable monomer other than the conjugated diene compound in the polymer block (A-2) is preferably less than 50 mol%, more preferably less than 30 mol%, still more preferably less than 20 mol%, even more preferably less than 10 mol%, and particularly preferably 0 mol%. In other words, in the polymer block (A-2), the content of structural units derived from another polymerizable monomer other than the conjugated diene compound is preferably 0 mol% or more and less than 50 mol%.

Preferred examples of the other polymerizable monomer include at least one compound selected from the group consisting of aromatic vinyl compounds such as styrene, α-methylstyrene, o-methylstyrene, m-methylstyrene, p-methylstyrene, p-t-butylstyrene, 2,4-dimethylstyrene, N-vinylcarbazole, vinylnaphthalene, and vinylanthracene, methyl methacrylate, methyl vinyl ether, β-pinene, 8,9-p-menthene, dipentene, methylene norbornene, 2-methylene tetrahydrofuran, 1,3-cyclopentadiene, 1,3-cyclohexadiene, 1,3-cycloheptadiene, 1,3-cyclooctadiene, and the like.

In the modified hydrogenated product (A) or the hydrogenated block copolymer (A1) which is an unmodified hydrogenated block copolymer, the hydrogenation rate of the polymer block (A-2) is more than 0 mol%. That is, at least a portion of the carbon-carbon double bonds of the polymer block (A-2) is hydrogenated.

From the viewpoint of weather resistance and heat resistance, the hydrogenation rate of the polymer block (A-2) is preferably 80 mol% or more, more preferably 85 mol% or more, and even more preferably 87 mol% or more. The upper limit is not particularly limited, and may be, for example, 99.8 mol% or less. In other words, the hydrogenation rate of the polymer block (A-2) is preferably 80 to 99.8 mol%.

The hydrogenation rate of the polymer block (A-2) can be controlled within the above range by, for example, controlling the amount of hydrogenation catalyst and the hydrogenation reaction time.

The above hydrogenation rate is a value determined by ¹H-NMR measurement of the content of carbon-carbon double bonds in the structural units derived from the conjugated diene compound in the polymer block (A-2) after hydrogenation. More specifically, it is a value measured according to the method described in Examples.

### (Bonding Mode of Polymer Block (A-1) and Polymer Block (A-2))

The bonding form of the block copolymer (A0) is not limited as long as the polymer block (A-1) and the polymer block (A-2) are bonded together, and may be any one of linear, branched, radial, or a combination of two or more of these bonding modes. Among these, it is preferable that the bonding form between the polymer block (A-1) and the polymer block (A-2) is linear, and examples thereof include, when the polymer block (A-1) is represented by A and the polymer block (A-2) is represented by B, a diblock copolymer represented by A-B, a triblock copolymer represented by A-B-A or B-A-B, a tetrablock copolymer represented by A-B-A-B, a pentablock copolymer represented by A-B-A-B-A or B-A-B-A-B, and an (A-B)nZ type copolymer (Z represents a coupling agent residue, and n represents an integer of 3 or more). Among these, a linear triblock copolymer or a diblock copolymer is preferred, and an A-B-A type triblock copolymer is preferably used from the viewpoint of flexibility, ease of production, etc.

A specific example of the A-B-A type triblock copolymer is a styrene-hydrogenated butadiene/isoprene-styrene copolymer. That is, as the block copolymer, it is preferable to include a styrene-hydrogenated butadiene/isoprene-styrene copolymer.

Here, in the present specification, when polymer blocks of the same type are linearly bonded via a bifunctional coupling agent or the like, the entire bonded polymer block is treated as one polymer block. Accordingly, including the above examples, the polymer block that should originally be strictly written as Y-Z-Y (Z represents a coupling residue) is expressed as Y as a whole, unless it is necessary to particularly distinguish it from a single polymer block Y In the present specification, since this type of polymer block containing a coupling agent residue is treated as described above, for example, a block copolymer block that contains a coupling agent residue and should be strictly written as A-B-Z-B-A (Z represents a coupling agent residue) is written as A-B-A, and is treated as an example of a triblock copolymer.

In addition, the block copolymer (A0) may contain, other than the polymer block (A-1) and the polymer block (A-2), a polymer block (A-3) made of a polymerizable monomer within a range that does not impair the purpose of the present invention. The polymer block (A-3) preferably contains a structural unit derived from isoprene (Ip), and the content of the structural unit derived from isoprene (Ip) in the polymer block (A-3) based on the total mass of the polymer block (A-3) is preferably 30% by mass or more, more preferably 35% by mass or more, and still more preferably 40% by mass or more. Further, the upper limit of the structural unit derived from isoprene (Ip) in the polymer block (A-3) is not particularly limited, and the polymer block (A-3) may also contain substantially 100% by mass of a structural unit derived from isoprene (Ip).

The conjugated diene compound constituting the polymer block (A-3) is mainly composed of an isoprene (Ip) unit, and may further contain, for example, at least one selected from 2,3-dimethylbutadiene, 1,3-pentadiene, and 1,3-hexadiene.

On the other hand, when the polymer block (A-3) contains both a butadiene (Bd) unit and an isoprene (Ip) unit, the content ratio of the butadiene (Bd) unit and the isoprene (Ip) unit (butadiene unit/isoprene unit) (molar ratio) is, from the viewpoint of improving performance, preferably 10/90 to 90/10, more preferably 30/70 to 70/30, and particularly preferably 40/60 to 60/40.

Although the vinyl bonding amount of the polymer block (A-3) (a total amount of 1,2-bond unit and 3,4-bond unit) is not particularly limited, it is preferably in the range of 2 to 90 mol%. One of the preferred embodiments of the modified hydrogenated product (A) of the present invention is a composition containing the modified hydrogenated product (A) and a propylene-based polymer. Examples of the propylene-based polymer include homopolypropylene (homo-PP), polypropylene such as a random copolymer of propylene and an α-olefin comonomer (random PP), and block polypropylene (block PP), and a propylene-based elastomer ("Vistamaxx" series, etc. manufactured by ExxonMobil Chemical Company). When placing particular emphasis on improving the compatibility between the modified hydrogenated product (A) and the propylene-based polymer, the vinyl bonding amount in (A-3) (total amount of 1,2-bond unit and 3,4-bond unit of isoprene (Ip) and 1,2-bond unit of butadiene (Bd)) is preferably 45 to 90 mol%, more preferably 50 to 90 mol%, and even more preferably 55 to 85 mol%.

In addition, when placing particular emphasis on improving the compatibility between the modified hydrogenated product (A) and the propylene-based polymer, the polymer block (A-3) is preferably a polymer block substantially containing 100% by mass of a structural unit derived from isoprene (Ip), or a polymer block containing both a butadiene (Bd) unit and an isoprene (Ip) unit, and more preferably a polymer block containing both a butadiene (Bd) unit and an isoprene (Ip) unit. On the other hand, when placing particular emphasis on improving the impact resistance of a composition containing the modified hydrogenated compound (A) and the propylene-based polymer, the vinyl bonding amount in the polymer block (A-3) (total amount of 1,2-bond unit and 3,4-bond unit of isoprene (Ip) and 1,2-bond unit of butadiene (Bd)) is preferably 2 to 30 mol%, more preferably 2 to 25 mol%, even more preferably 3 to 20 mol%, still more preferably 4 to 15 mol%, and particularly preferably 5 to 10 mol%.

Furthermore, it is also one of the preferred embodiments of the present invention that the modified hydrogenated product (A) is used together with a polymer other than the propylene-based polymer. From the viewpoint of improving the impact resistance and/or heat shock resistance of the composition, the polymer block (A-3) is preferably a polymer block substantially containing 100% by mass of a structural unit derived from isoprene (Ip), or a polymer block containing both a butadiene (Bd) unit and an isoprene (Ip) unit, and more preferably a polymer block containing both a butadiene (Bd) unit and an isoprene (Ip) unit. In the case of such an embodiment, the vinyl bonding amount in (A-3) is preferably 2 to 30 mol%, more preferably 2 to 25 mol%, even more preferably 3 to 20 mol%, still more preferably 4 to 15 mol%, and particularly preferably 5 to 10 mol%.

In addition, similar to the polymer block (A-2), the carbon-carbon double bonds that the polymer block (A-3) has are preferably at least partially hydrogenated, from the viewpoint of affinity between the modified hydrogenated compound (A) and the polyolefin-based resin (B) in the resin composition described later. The hydrogenation rate of the polymer block (A-3) in the hydrogenated block copolymer (A1) is preferably 80 mol% or more, more preferably 85 mol% or more, and even more preferably 87 mol% or more. The upper limit is not particularly limited, and may be, for example, 99.8 mol% or less. In other words, the hydrogenation rate of the polymer block (A-3) is preferably 80 to 99.8 mol%.

The hydrogenation rate of the polymer block (A-3) can be controlled within the above range by, for example, controlling the hydrogenation reaction time.

Since the hydrogenation rate of the polymer block (A-3) in the hydrogenated block copolymer (A1) is within the above range, the modified hydrogenated product (A) in the resin composition described later shows good affinity with the polyolefin-based resin (B), and as a result, the resin composition tends to have better impact resistance.

When the polymer block (A-1) is represented by A, the polymer block (A-2) is represented by B, and the polymer block (A-3) is represented by C, examples of the structure of the block copolymer include a triblock copolymer represented by A-B-C, a tetrablock copolymer represented by A-B-C-A, and a tetrablock copolymer represented by A-B-A-C. Among these, from the viewpoint of the impact resistance of the resin composition of the present invention, which will be described later, a tetrablock copolymer represented by A-B-A-C is preferred. In the resin composition of the present invention, when placing particular emphasis on the balance between moldability and impact resistance, the bonding form of the block copolymer (C) is preferably a tetrablock copolymer represented by A-B-A-B or a tetrablock copolymer represented by A-B-A-C, that is, a tetrablock copolymer having a polymer block represented by B or C in a terminal block.

The ratio of the terminal block B or C in the hydrogenated block copolymer (A1) in the case where the hydrogenated block copolymer (A1) has the structure of a tetrablock copolymer represented by A-B-A-B or a tetrablock copolymer represented by A-B-A-C is, from the viewpoint of obtaining a better balance between moldability and impact resistance, preferably 40% by mass or less, more preferably 1 to 35% by mass, even more preferably 4 to 30% by mass, and particularly preferably 12 to 30% by mass, in the entire hydrogenated block copolymer (A1). The lower limit is not particularly limited, and may be, for example, 1% by mass.

### (Weight Average Molecular Weight of Block Copolymer (A0) and Hydrogenated Block Copolymer (A1))

The weight average molecular weight (Mw) of the block copolymer (A0) and the hydrogenated block copolymer (A1) determined by gel permeation chromatography in terms of standard polystyrene is preferably 10,000 to 400,000, more preferably 30,000 to 300,000, still more preferably 50,000 to 200,000, and particularly preferably 70,000 to 150,000. When the Mw of the block copolymer (A0) and the hydrogenated block copolymer (A1) is 10,000 or more, the heat resistance becomes high, and when the Mw is 400,000 or less, the handleability of the resin composition, which contains the modified hydrogenated product (A) and will be described later, is improved.

### (Molecular Weight Distribution of Block Copolymer (A0))

The molecular weight distribution (Mw/Mn) of the block copolymer (A0) is preferably 1.00 to 2.00, more preferably 1.00 to 1.60, even more preferably 1.00 to 1.40, and still more preferably 1.00 to 1.20. When the molecular weight distribution is within the above range, the block copolymer (A0) can be easily handled.

### (Functional Group)

The modified hydrogenated product (A) can be produced by, for example, reacting a compound having one, or two or more functional groups selected from an alkoxysilyl group, a carboxy group, an amino group, a hydroxy group, an epoxy group, and a group derived from an acid anhydride to introduce a functional group into the hydrogenated block copolymer (A1) in which the block copolymer (A0) has been hydrogenated, and modifying the hydrogenated block copolymer (A1). The functional group is preferably one, or two or more functional groups selected from an alkoxysilyl group and a group derived from an acid anhydride, and more preferably a group derived from a maleic anhydride. The method for producing the modified hydrogenated product (A) will be described later.

By introducing the above-mentioned functional group into the hydrogenated block copolymer (A1), it is possible to improve the compatibility in the resin composition containing the modified hydrogenated compound (A), and also to achieve high adhesiveness to metals and other materials. It is preferable that the modified hydrogenated product (A) has the above functional group in a side chain. By adopting an embodiment in which the side chain has the above-mentioned functional group, it is easy to introduce three or more functional groups per molecular chain of the modified hydrogenated product (A), and it becomes easy to expand the molecular design according to the embodiment.

The content of the functional group in the modified hydrogenated product (A) is preferably 0.1 phr or more, more preferably 0.15 phr or more, even more preferably 0.2 phr or more, and still more preferably 0.25 phr or more. Further, the content of the functional group in the modified hydrogenated product (A) is preferably 5.0 phr or less, more preferably 4.0 phr or less, still more preferably 3.0 phr or less, even more preferably 2.0 phr or less, and further more preferably 0.95 phr or less. In other words, the content of the functional group in the modified hydrogenated product (A) is preferably 0.1 to 5.0 phr.

Further, the content of the functional group in the modified hydrogenated product (A) is preferably 0.1 mol% or more, more preferably 0.15 mol% or more, still more preferably 0.2 mol% or more, and even more preferably 0.25 mol% or more. In addition, the content of the functional group in the modified hydrogenated product (A) is preferably 5.0 mol% or less, more preferably 4.0 mol% or less, still more preferably 3.0 mol% or less, even more preferably 2.0 mol% or less, and further more preferably 0.95 mol% or less. In other words, the content of the functional group in the modified hydrogenated product (A) is preferably 0.1 to 5.0 mol%.

When the content of the functional group in the modified hydrogenated product (A) is within the above range, the resin composition containing the modified hydrogenated product (A) can have excellent adhesiveness. The content of the functional group (phr) means parts by mass of the functional group based on 100 parts by mass of the modified hydrogenated product (A), and can be calculated by titration, ¹H-NMR measurement, or measurement based on infrared spectroscopy (IR measurement).

The modification amount in the modified hydrogenated product (A) can be adjusted by adjusting the proportion, type, etc. of a modifier used.

### (Characteristics of Modified Hydrogenated Product (A))

The weight average molecular weight (Mw) of the modified hydrogenated product (A) is preferably 10,000 to 400,000, more preferably 30,000 to 300,000, even more preferably 50,000 to 200, 000, and particularly preferably 70,000 to 150,000.

The Mw of the modified hydrogenated product (A) can be adjusted, for example, by the amount of a polymerization initiator used during polymerization.

From the viewpoint of low-temperature properties, the glass transition temperature of the modified hydrogenated product (A) is preferably -75 to 0°C, more preferably -70 to -10°C, and even more preferably -65 to -20°C.

In the present specification, the glass transition temperature is a value measured using a differential scanning calorimeter (DSC) measuring device, and is specifically measured by the method described in Examples.

The glass transition temperature of the modified hydrogenated product (A) can be adjusted by, for example, the content of 3,4-bond and 1,2-bond in the conjugated diene.

The melt flow rate of the modified hydrogenated product (A) measured according to JIS K7210:2014 under conditions of a temperature of 230°C and a load of 21N is 0.1 g/min or more, and from the viewpoint of kneading the resin composition, is preferably 0.3 to 15 g/10 min, more preferably 0.5 to 10 g/10 min, and still more preferably 1 to 7 g/10 min.

When the melt flow rate is within the above range, the viscosity of the resin composition during kneading becomes high, resulting in good dispersion.

The tan δ (loss tangent) of the modified hydrogenated product (A) is a ratio of loss modulus/storage modulus at a frequency of 1 Hz in dynamic viscoelasticity measurement, and the peak top temperature and intensity of tan δ greatly contribute to the properties of the viscoelastic body. Here, the peak top intensity of tan δ is a value of tan δ when the peak of tan δ is at its maximum. Further, the peak top temperature of tan δ is a temperature at which the peak of tan δ is at its maximum. The lower the numerical value is, the better the elasticity is; and the higher the numerical value is, the better the viscosity is.

In the present specification, the peak top temperature and intensity of the tan δ of the block copolymer (A0) or the hydrogenated block copolymer (A1) are determined by pressing the block copolymer (A0) or the hydrogenated block copolymer (A1) at a temperature of 230°C and a pressure of 10 MPa for 3 minutes to create a single layer sheet with a thickness of 1.0 mm, then cutting the single layer sheet into a disk shape and using the same as a test piece for measurement. The measurement conditions are a strain amount of 0.1%, a frequency of 1 Hz, a measurement temperature of about -70 to +120°C, and a temperature increase rate of 3°C/min in accordance with JIS K 7244-10:2005.

More specifically, the peak top temperature and tan δ intensity of the block copolymer (A0) or the hydrogenated block copolymer (A1) are values measured according to the method described in Examples.

The modified hydrogenated product (A) has a peak top strength of tan δ of 0.95 or less as measured above, preferably 0.90 or less, and more preferably 0.85 or less. It is advantageous from the viewpoint of impact resistance that the peak top strength of tan δ is 0.95 or less. By controlling the ratio of isoprene to a conjugated diene compound other than isoprene and the vinyl bonding amount in the polymer block (A-2), the peak top intensity of tan δ can be set within the above range.

In addition, the modified hydrogenate (A) preferably has a peak top temperature of tan δ of -10°C or lower, more preferably -20°C or lower, still more preferably -30°C or lower, and even more preferably -40°C or lower. Within the above temperature range, sufficient impact resistance can be obtained under an actual use environment.

### <Method for Producing Modified Hydrogenated Product (A)>

The modified hydrogenated product (A) can be produced by using at least an aromatic vinyl compound and a conjugated diene compound as monomers, polymerizing the aromatic vinyl compound and the conjugated diene compound to form a block copolymer (A0), and then undergoing a modification reaction using a modifying agent before or after hydrogenating the block copolymer (A0).

### (Preparation of Block Copolymer (A0))

The block copolymer (A0) can be obtained as a block copolymer having a polymer block (A-1) containing a structural unit derived from the aromatic vinyl compound and a polymer block (A-2) containing a structural unit derived from the conjugated diene compound, and optionally further having a polymer block (A-3), by carrying out a polymerization reaction using at least an aromatic vinyl compound and a conjugated diene compound as monomers.

The aromatic vinyl compound, the conjugated diene compound, the polymer block (A-1), the polymer block (A-2), and the polymer block (A-3) have the same meanings as described above.

The production can be achieved in the above-described polymerization reaction, for example, by a solution polymerization method, an emulsion polymerization method, a solid phase polymerization method. Among them, a solution polymerization method is preferred, and for example, publicly known methods, such as an ionic polymerization method including anionic polymerization and cationic polymerization, and a radical polymerization method, may be applied. Among them, an anionic polymerization method is preferred. In the anionic polymerization method, the aromatic vinyl compound and the conjugated diene compound are sequentially added in the presence of a solvent, an anionic polymerization initiator, and if necessary, a Lewis base, to obtain the block copolymer, and a coupling agent may be added as necessary to react.

Examples of an organo lithium compound usable as a polymerization initiator for anionic polymerization in the above method include methyllithium, ethyllithium, n-butyllithium, sec-butyllithium, tert-butyllithium, and pentyllithium. Further, examples of a dilithium compound usable as the polymerization initiator include dilithium naphthalene and dilithiohexyl benzene.

Examples of the coupling agent include dichloromethane, dibromomethane, dichloroethane, dibromoethane, dibromobenzene, and phenyl benzoate.

Usage amounts of the polymerization initiators and coupling agents are appropriately determined according to a desired weight average molecular weight of the block copolymer (A0) or the hydrogenated block copolymer (A1). Generally, it is preferable the initiators, such as an alkyl lithium compound and a dilithium compound, be used at a ratio of 0.01 to 0.2 parts by mass with respect to 100 parts by mass of a total of monomers used for polymerization, such as the aromatic vinyl compound and the conjugated diene compound, and when a coupling agent is used, it is preferable the coupling agent be used at a ratio of 0.001 to 0.8 parts by mass with respect to 100 parts by mass of the monomers.

The solvent is not particularly limited as long as it does not adversely affect the anionic polymerization reaction, and examples thereof include aliphatic hydrocarbons, such as cyclohexane, methylcyclohexane, n-hexane, and n-pentane; and aromatic hydrocarbons, such as benzene, toluene, and xylene. The polymerization reaction is carried out generally at a temperature of 0 to 100°C, and preferably 10 to 70°C, for 0.5 to 50 hours, and preferably 1 to 30 hours.

In addition, by adding a Lewis base as a cocatalyst during polymerization of a conjugated diene compound, the content of 3,4-bond and 1,2-bond in the polymer block (A-2) and the polymer block (A-3) can be adjusted.

Examples of Lewis bases that can be used include ethers such as dimethyl ether, diethyl ether, tetrahydrofuran, and 2,2-di(2-tetrahydrofuryl)propane (DTHFP); glycol ethers such as ethylene glycol dimethyl ether, diethylene glycol dimethyl ether, triethylene glycol dimethyl ether, and tetraethylene glycol dimethyl ether; amines such as triethylamine, N,N,N',N'-tetramethylenediamine, N,N,N',N'-tetramethylethylenediamine (TMEDA), and N-methylmorpholine; metal salts of sodium or potassium salts of aliphatic alcohols, such as sodium t-butyrate, sodium t-amylate, and sodium isopentylate, or metal salts of sodium or potassium salts of alicyclic alcohols, such as dialkyl sodium cyclohexanolate, for example, sodium mentholate.

One type of these Lewis base may be used alone, or two or more types thereof may be used in combination.

From the viewpoint of adjusting the vinyl bonding amount in the polymer block (A-2) to 30 mol% or less, the amount of Lewis base added is usually 1.0 mol or less, preferably 0.5 mol or less, per 1 mol of the alkyl lithium compound or the dilithium compound used as a polymerization initiator.

In addition, when the polymer block (A-3) contains a structural unit derived from isoprene and/or butadiene, from the viewpoint of adjusting the vinyl bonding amount of the isoprene unit and/or butadiene unit constituting the polymer block (A-3) to 2 to 90 mol%, preferably 30 mol% or more, the amount of Lewis base added when forming the polymer block (A-3) is usually 1.1 to 3.0 mol, preferably 1.5 to 2.0 mol, per 1 mol of the alkyl lithium compound or the dilithium compound used as a polymerization initiator.

After the polymerization is carried out by the method described above, an active hydrogen compound, such as an alcohol, a carboxylic acid, and water, is added to stop the polymerization reaction. Thus, the block copolymer can be obtained.

### (Hydrogenation Reaction)

The hydrogenated block copolymer (A1 ) can be produced by subjecting the block copolymer (A0) obtained by the above production method to a hydrogenation reaction in an inert organic solvent in the presence of a hydrogenation catalyst. By the above hydrogenation reaction, a carbon-carbon double bond derived from the conjugated diene compound in the polymer block (A-2) in the block copolymer (A0) and in the optional polymer block (A-3) is hydrogenated, to obtain a hydrogenated product of the block copolymer (A0), that is, the hydrogenated block copolymer (A1).

The block copolymer (A0) may be hydrogenated after being modified by a method described later.

The hydrogenation reaction can be carried out at a hydrogen pressure of about 0.1 to 20 MPa, preferably 0.5 to 15 MPa, and more preferably 0.5 to 5 MPa, at a reaction temperature of about 20 to 250°C, preferably 50 to 180°C, and more preferably 70 to 180°C, for a reaction time of generally about 0.1 to 100 hours, and preferably 1 to 50 hours.

Examples of the hydrogenation catalyst include Raney nickel; a heterogeneous catalyst in which a metal, such as Pt, Pd, Ru, Rh, and Ni, is carried on a carrier, such as carbon, alumina, and diatomaceous earth; a Ziegler-based catalyst including a combination of a transition metal compound with an alkyl aluminum compound or an alkyl lithium compound; and a metallocene-based catalyst.

The hydrogenated block copolymer (A1) (or the modified hydrogenated product (A)) thus obtained can be obtained by, after a polymerization reaction solution is poured into methanol, or the like, resulting in solidification, heating or drying the resultant under reduced pressure, or after so-called steam stripping in which the polymerization reaction solution is poured into hot water with steam to remove the solvent by azeotropy is performed, heating or drying the resultant under reduced pressure.

The extent to which the hydrogenation rate of the carbon-carbon double bond in the polymer block (A-2) and the optional polymer block (A-3) at the time of obtaining a hydrogenated product should reach can be specified depending on the performance desired in various uses of the resin composition described later.

The higher the hydrogenation rate of the hydrogenated product is, the higher the heat resistance and weather resistance of the hydrogenated product can be. In the modified hydrogenated product (A) used in the resin composition, as described above, the hydrogenation rate of the polymer block (A-2) and the polymer block (A-3) is preferably 80 to 99.8 mol%.

### (Modification Reaction)

The modified hydrogenated product (A) can be produced by introducing the aforementioned functional group after hydrogenating the block copolymer (A0), or by introducing the aforementioned functional group before hydrogenating the block copolymer (A0) and then hydrogenating. In the case of modification by a radical reaction, from the viewpoint of reaction control, it is preferable to produce the hydrogenated block copolymer (A1) by hydrogenating the block copolymer (A0) and then to introduce a specific functional group.

Further, the reaction of introducing the aforementioned functional group into the hydrogenated block copolymer (A1) and then modifying the same (hereinafter sometimes referred to as "modification reaction") can be carried out by a publicly known method.

The above-mentioned modification reaction can be carried out, for example, by dissolving the hydrogenated block copolymer (A1) in an organic solvent, adding thereto various modifiers capable of adding the aforementioned functional group, and reacting at about 50 to 300°C for about 0.5 to 10 hours.

In addition, the above modification reaction can be carried out, for example, by melting the hydrogenated block copolymer (A1) using an extruder or the like without using a solvent, and adding various modifiers. In this case, the temperature of the modification reaction is usually at the melting point of the hydrogenated block copolymer (A1) or higher and 400°C or lower, preferably 90 to 350°C, and more preferably 100 to 300°C, and the reaction time is usually about 0.5 to 10 minutes.

Furthermore, it is preferable to add a radical initiator when carrying out the above modification reaction in a molten state, and an anti-aging agent may be added from the viewpoint of suppressing side reactions.

In the method for producing the modified hydrogenated product (A), the modification reaction is preferably carried out by the latter method of modification in a molten state, from the viewpoint of improving workability, vibration damping properties, and thermal stability.

That is, a preferred embodiment of the method for producing the modified hydrogenated product (A) further includes a step of, after hydrogenating the block copolymer (A0) to form the hydrogenated block copolymer (A1), introducing one, or two or more functional groups selected from an alkoxysilyl group, a carboxy group, an amino group, a hydroxy group, an epoxy group, and a group derived from an acid anhydride into the hydrogenated block copolymer (A1) in a molten state using a radical initiator.

Examples of a modifier that can add the above functional group include dimethyldiethoxysilane, tetramethoxysilane, tetraethoxysilane, 3-aminopropyltriethoxysilane, vinyltrimethoxysilane, vinyltriethoxysilane, hydroxymethyltriethoxysilane, vinylbenzyldiethylamine, vinylbenzyldimethylamine, 1-glycidyl-4-(2-pyridyl)piperazine, 1-glycidyl-4-phenylpiperazine, 1-glycidyl-4-methylpiperazine, 1-glycidyl-4-methylhomopiperazine, 1-glycidylhexamethyleneimine, and tetraglycidyl-1,3-bisaminomethylcyclohexane, and as the modifier, an unsaturated carboxylic acid anhydride such as maleic anhydride, citraconic anhydride, 2,3-dimethylmaleic anhydride, and itaconic anhydride can also be used. Furthermore, from the modifiers described in JP 2011-132298 A, a modifier capable of adding the aforementioned functional group may be employed. One type of the aforementioned modifiers may be used alone, or two or more types thereof may be used in combination.

Among these, it is particularly preferable to use maleic anhydride as a modifier to obtain the modified hydrogenated product (A) having a group derived from maleic anhydride.

The amount of the modifier to be added may be appropriately determined depending on the content of the aforementioned functional group in the modified hydrogenated product (A) described above so as to obtain a desired content of the functional group. However, the amount of the modifier to be added is usually about 0.01 to 10 parts by mass, preferably 0.01 to 5 parts by mass, more preferably 0.01 to 3 parts by mass, and still more preferably 0.05 to 2 parts by mass, with respect to 100 parts by mass of the hydrogenated block copolymer (A1) or the block copolymer (A0).

As the radical initiator, an organic peroxide or an organic perester, such as dialkyl peroxide, diacyl peroxide, peroxyester, peroxyketal, dialkyl peroxide, and hydroperoxide can be used, and an azo compound, such as azobisisobutyronitrile and dimethylazoisobutyrate can also be used. Among the above radical initiators, an organic peroxide is preferred, and dialkyl peroxide is more preferred.

The amount of the radical initiator to be added may be appropriately determined depending on the combination of the hydrogenated block copolymer (A1) and the modifier, and the amount is usually about 0.01 to 10 parts by mass, preferably 0.01 to 5 parts by mass, more preferably 0.01 to 3 parts by mass, and even more preferably 0.05 to 2 parts by mass, with respect to 100 parts by mass of the hydrogenated block copolymer (A1).

The pellet according to an embodiment of the present invention is a pellet containing the modified hydrogenated product (A). Such a pellet is obtained by, for example, melting the hydrogenated block copolymer (A1) using an extruder or the like without using a solvent, and cutting the modified hydrogenated product (A) after adding various modifiers thereto and immediately after melt-kneading (discharge from a kneading device) with a cutter or the like.

More specifically, examples of a pelletizing method include a method of extruding the modified hydrogenated product (A) in a strand shape from a single-screw or twin-screw extruder and cutting it underwater with a rotating blade installed in the front of a die part (underwater pelletizing), or a method of dropping pellets into water after cutting (watering hot pelletizing); a method of extruding the modified hydrogenated product (A) in a strand shape from a single-screw or twin-screw extruder, cooling with water or air, and then cutting with a strand cutter; and a method of melt-mixing using an open roll or a Banbury mixer, then forming into a sheet using a roll, further cutting the sheet into strips, and then cutting into cubic pellets using a pelletizer.

An anti-blocking agent may be blended in the above pellets, from the viewpoint of making it easier to prevent the pellets from sticking together (blocking). When an anti-blocking agent is blended, although it is preferably blended in a state where it is attached to the pellet surface, it may also be included to some extent inside the pellet. For example, pellets with the anti-blocking agent attached to the surface can be obtained by a method such as putting the pellets and the anti-blocking agent into a container and stirring the same.

Examples of the anti-blocking agent include a polyolefin-based wax, such as polypropylene wax and polyethylene wax; hydrous magnesium silicate (talc), silica; ethylene bisstearylamide; calcium stearate; and zinc stearate, magnesium stearate.

The average particle diameter of the anti-blocking agent is not particularly limited. However, from the viewpoint of ensuring adhesion to pellets and slipperiness between pellets, the average particle diameter is preferably 1 to 15 µm, more preferably 2 to 14 µm, and still more preferably 3 to 13 µm. Further, the blending amount of the anti-blocking agent is not particularly limited. However, from the viewpoint of ensuring anti-blocking properties and mechanical properties, the blending amount is preferably 0.1 to 2.0 parts by mass, more preferably 0.1 to 1.0 parts by mass, with respect to 100 parts by mass of the pellets containing the modified hydrogenated product (A).

An embodiment of the present invention also provides a resin composition (hereinafter sometimes referred to as "resin composition (D1)" in the present specification) containing the modified hydrogenated product (A) and a polyolefin-based resin (B).

### <Polyolefin-based Resin (B)>

Examples of the polyolefin-based resin (B) contained in the resin composition (D1) include polypropylene, polyethylene, polymethylpentene, ethylene/vinyl acetate copolymer, and a resin that is a combination of a plurality types thereof.

Examples of the polypropylene include homopolypropylene, block polypropylene which is a block copolymer with an α-olefin such as ethylene, and random polypropylene which is a random copolymer with an α-olefin such as ethylene.

Examples of the polyethylene include high-density polyethylene, medium-density polyethylene, low-density polyethylene, and linear low-density polyethylene.

Examples of the polymethylpentene include a homopolymer of 4-methyl-1-pentene, and a copolymer having a structural unit derived from 4-methyl-1-pentene and a structural unit derived from an α-olefin having 2 to 20 carbon atoms (provided that 4-methyl-1-pentene is excluded).

The ethylene/vinyl acetate copolymer is not particularly limited as long as it is a resin obtained by copolymerizing vinyl acetate as a comonomer with ethylene, and those with various vinyl acetate group contents (VA contents) can be used.

In addition, a homopolymer or copolymer of an α-olefin,a copolymer of propylene and/or ethylene with an α-olefin, etc. can also be used as the polyolefin-based resin (B).

Examples of the α-olefin include an α-olefin having 20 or less carbon atoms, such as 1-butene, 1-pentene, 3-methyl-1-butene, 1-hexene, 3-methyl-1-pentene, 4-methyl-1-pentene, 1-heptene, 1-octene, 1-nonene, 1-decene, 1-dodecene, 1-tetradecene, 1-hexadecene, 1-octadecene, and 1-eicosene, and one, or two or more types thereof can be used.

### <Additive>

The resin composition (D1) may contain various additives within a range that does not impair the effects of the present invention.

Examples of the additive include an inorganic filler, such as talc, clay, mica, calcium silicate, glass, glass hollow spheres, glass fibers, calcium carbonate, magnesium carbonate, basic magnesium carbonate, aluminum hydroxide, magnesium hydroxide, calcium hydroxide, zinc borate, dawsonite, ammonium polyphosphate, calcium aluminate, hydrotalcite, silica, diatomaceous earth, alumina, titanium oxide, iron oxide, zinc oxide, magnesium oxide, tin oxide, antimony oxide, barium ferrite, strontium ferrite, carbon black, graphite, carbon fiber, activated carbon, carbon hollow spheres, calcium titanate, lead zirconate titanate, and silicon carbide; an organic filler, such as wood flour and starch; cellulose fiber, cellulose nanofiber, carbon fiber, and carbon nanofiber.

Examples of the additive further include a tackifying resin, a plasticizer, a filler, a crosslinking agent (an isocyanate-based crosslinking agent, an epoxy-based crosslinking agent, a metal chelate-based crosslinking agent, an aziridine-based crosslinking agent, an amine resin, etc.), a heat stabilizer, a light stabilizer, an ultraviolet absorber, an infrared absorber, an antioxidant, a lubricant, a colorant, an antistatic agent, a flame retardant, a water repellent, a waterproofing agent, a hydrophilicity imparting agent, a conductivity imparting agent, a thermal conductivity imparting agent, an electromagnetic shielding imparting agent, a translucency adjusting agent, a fluorescent agent, a slidability imparting agent, a transparency imparting agent, an anti-blocking agent, a metal deactivator, an antibacterial agent, a crystal nucleating agent, an anti-crack agent, an antiozonant, a rodent repellent, a dispersant, a thickener, a light-resistant agent, a weathering agent, a copper inhibitor, a reinforcing agent, a fungicide, and macrocyclic molecules (cyclodextrin, calixarene, cucurbituril, etc.).

One type of the additives may be used alone, or two or more types thereof may be used in combination.

The content of the additive in the resin composition (D1) is not limited and can be adjusted as appropriate depending on the type of the additive, the application of the resin composition (D1), etc. When the resin composition (D1) contains the additive, the content of the additive may be, for example, based on a total mass of the resin composition (D1), 70% by mass or less, 60% by mass or less, 50% by mass or less, 45% by mass or less, 30% by mass or less, 20% by mass or less, and 10% by mass or less, and may be 0.01% by mass or more, 0.1% by mass or more, 1% by mass or more, and 5% by mass or more. In other words, the content of the additive in the resin composition (D1) is preferably 0.01 to 70% by mass.

### <Proportion of Each Component in Resin Composition (D1)>

The proportion of the modified hydrogenated product (A) in the resin composition (D1) is preferably 1 to 50% by mass based on the total mass of the resin composition (D1). From the viewpoint of impact resistance of the composition, the content is more preferably 3 to 40% by mass, still more preferably 3 to 30% by mass, even more preferably 5 to 25% by mass. Further, in the resin composition (D1), when the mass of the modified hydrogenated product (A) is A and the mass of the polyolefin-based resin (B) is B, from the viewpoint of adhesiveness, A/B is preferably 10/90 to 70/30, more preferably 20/80 to 60/40, and still more preferably 30/70 to 50/50.

In addition, from the viewpoint of sufficiently developing adhesiveness, etc., the total mass of the modified hydrogenated product (A) and the polyolefin-based resin (B) contained in the resin composition (D1) is preferably 50% by mass or more, more preferably 65% by mass or more, still more preferably 70% by mass or more, even more preferably 80% by mass or more, and particularly preferably 90% by mass or more. The upper limit of the total mass is not particularly limited and may be 100% by mass, 99.9% by mass, or 99.5% by mass. In other words, the total mass of the modified hydrogenated product (A) and the polyolefin-based resin (B) contained in the resin composition (D1) is preferably 50 to 100% by mass.

<Method for Producing Resin Composition (D1)>

The resin composition (D1) can be produced by mixing the modified hydrogenated product (A), the polyolefin-based resin (B), and various additives as necessary using a mixer, such as a Henschel mixer, a V blender, a ribbon blender, a tumbler blender, and a conical blender, or can be produced by subsequently melt-kneading at approximately 80 to 350°C using a kneading machine, such as a single-screw extruder, a twin-screw extruder, a kneader, a Banbury mixer, and a roll.

The resin composition can also be prepared by dissolving each component in a solvent in which at least the modified hydrogenated product (A) and the polyolefin-based resin (B) are soluble, mixing the components, and removing the solvent.

The resin composition can be made into any shape, such as veil, crumb, and pellet. In addition, the resin composition can be made into various molded articles by a melt-kneading molding machine, or by an injection molding method, an injection compression molding method, an extrusion molding method, a blow molding method, a press molding method, a vacuum forming method, a foam molding method, etc., using a veil, crumb, or pellet of the resin composition as a raw material.

### <Application of Resin Composition (D1)>

The resin composition (D1) can be suitably used as a sealant for joints between glass and aluminum sashes or metal openings and the like in windows of automobiles and buildings, and for connecting parts between glass and metal frames in solar cell modules, etc. It is also useful in a wide range of applications as a molded body or a structure bonded to glass, such as window moldings and gaskets for automobiles and buildings, glass sealants, and antiseptic materials. Furthermore, it can be used as an adhesive or a coating agent for separators of secondary batteries used in various information terminal devices such as notebook computers, mobile phones, and video cameras, and hybrid vehicles, fuel cell vehicles, and the like.

In addition, the resin composition (D1) can be used in industrial products, such as lead wires for switchboards and motors, heat-shrinkable tubes, and tapes for binding wires; OA equipment, such as TVs, projectors, personal computers, printers, scanners, keyboards, fax machines, and copy machines; home appliances, such as washing machines, dryers, refrigerators, vacuum cleaners, toasters, coolers, air conditioners, TVs, videos, DVDs, digital cameras, mobile phones, CD players, radios, speakers, alarms, and surveillance cameras; electronic devices, such as microwaves, rice cookers, and electronic heaters; accessories for electrical and electronic devices, such as control cables for game consoles, LAN cables, multicore cables, earphones, and charging devices; automobile, marine, and aircraft parts, such as insulated wire harnesses, car navigation systems, seats, ceiling coverings, and carpets; vehicle parts, such as hanging straps, sunshades, and connecting canopies; building material products, such as wallpaper, flooring materials, interior materials, exterior materials, door materials, balcony blind boards, and tarpaulins; and leisure products, such as tents, generators, and lighting.

An embodiment of the present invention also provides a resin composition (hereinafter sometimes referred to as "resin composition (D2)" in the present specification) that further contains a polar resin (C) in the resin composition (i.e., resin composition (D1)) containing the aforementioned modified hydrogenated product (A) and the polyolefin-based resin (B).

The modified hydrogenated product (A) contained in the resin composition (D1) has a polymer block (A-2) into which a specific functional group has been introduced through modification and is hydrogenated at a high rate. Therefore, it is believed that when the resin composition (D1) and the polar resin (C) are melt-kneaded, for example, the modified hydrogenated product (A) promotes compatibility between the polyolefin-based resin (B) and the polar resin (C), resulting in a resin composition (D2) in which one of the polyolefin-based resin (B) and the polar resin (C) is well dispersed in the other of the polyolefin-based resin (B) and the polar resin (C). Therefore, the resin composition (D2) has excellent processability and moldability compared to the polyolefin-based resin (B) alone. Moreover, the amount of the modified hydrogenated product (A) can be reduced.

Further, since one of the polar resin (C) and the polyolefin-based resin (B) is easily dispersed in the other of the polar resin (C) and the polyolefin-based resin (B), the resin composition (D2) or a molding product thereof has a good appearance.

In addition, in the resin composition (D2) or a molded article thereof, characteristics resulting from the block copolymer (A0) used as a raw material tend to appear. The resin composition (D2) uses the modified hydrogenated product (A) obtained from the block copolymer (A0) in which the vinyl bonding amount in the polymer block (A-2) is 30 mol% or less, and thus impact resistance and the like can be improved in the resin composition (D2) or a molded article thereof. In addition, by appropriately selecting the types and the like of the polar resin (C) and the polyolefin-based resin (B), the resin composition (D2) or a molded article thereof can have excellent physical properties such as tensile strength and elongation characteristics.

It can be said that the modified hydrogenated product (A) acts as a compatibilizer for making the polar resin (C) and a non-polar resin compatible. That is, a compatibilizer containing the modified hydrogenated product (A) is also mentioned as an embodiment of the present invention.

Such a compatibilizer may be the modified hydrogenated product (A) alone, and may also include a component other than the modified hydrogenated product (A), such as a processing aid, a reinforcing agent, a filler, a plasticizer, an open-cell foaming agent, a heat stabilizer, a light stabilizer, an ultraviolet absorber, an antioxidant, a lubricant, an antistatic agent, an antibacterial agent, a fungicide, a dispersant, a coloring agent, a foaming agent, a foaming aid, a flame retardant, a water repellent, a waterproofing agent, a conductivity imparting agent, a thermal conductivity imparting agent, an electromagnetic shielding imparting agent, a fluorescent agent, and a crystal nucleating agent.

The content of the modified hydrogenated product (A) in the compatibilizer is preferably 80% by mass or more, more preferably 90% by mass or more, and still more preferably 95% by mass, based on the total mass of the compatibilizer. The upper limit may be 100% by mass.

Polar resins to be made compatible by the compatibilizer are the same as the polar resin (C), while non-polar resins include styrene-based resins in addition to the polyolefin-based resin (B).

The compatibilizer may be mixed with the polar resin (C) and the polyolefin-based resin (B), or may be mixed with the polar resin (C) and then added with the polyolefin-based resin (B), or may be mixed with the polyolefin-based resin (B) and then added with the polar resin (C).

### <Morphology of Resin Composition (D2)>

It is presumed that the resin composition (D2) has one of the following morphologies (α) and (β).
(α) A sea-island structure in which domains containing the polar resin (C) are dispersed in the form of islands in a matrix of the polyolefin-based resin (B), more preferably, a structure in which a component mainly composed of the modified hydrogenated product (A) exists along the periphery of a domain mainly composed of the polar resin (C).
(β) A sea-island structure in which domains containing the polyolefin-based resin (B) are dispersed in the form of islands in a matrix of the polar resin (C), more preferably, a structure in which a component mainly composed of the modified hydrogenated product (A) exists along the periphery of a domain mainly composed of the polyolefin-based resin (B).

As mentioned above, the modified hydrogenated product (A) having the polymer block (A-2) hydrogenated at a high rate promotes the compatibility between the polyolefin-based resin (B) and the polar resin (C). Therefore, it is considered that the size of the domain mainly composed of the polar resin (C) and the size of the domain mainly composed of the polyolefin-based resin (B) formed in the resin composition (D2) or a molded article thereof are likely to be fine, with a volume average dispersion diameter or average diameter of several hundred nm or less.

Therefore, it is presumed that the dispersibility of the polar resin (C) in the polyolefin-based resin (B) or the dispersibility of the polyolefin-based resin (B) in the polar resin (C) can be improved, and mechanical properties such as tensile strength, tensile strain at break, and impact resistance of the resin composition (D2) or a molded article of the resin composition (D2) can be improved in a well-balanced manner.

### <Polar Resin (C)>

The polar resin (C) contained in the resin composition (D2) refers to a resin having a polar group such as a carboxy group, a sulfonic acid group, a hydroxy group, and a cyano group, a resin having an ether bond, an ester bond, an amide bond, a sulfide bond, etc. in the resin, or a resin containing at least one of oxygen, nitrogen, sulfur, and halogen in the molecule, and is a resin that undergoes electronic polarization within the molecule and has thermoplasticity.

The polar resin (C) is preferably a resin having a polar group such as a sulfonic acid group and a cyano group, a resin having an ether bond, an ester bond, an amide bond, a sulfide bond, etc. in the resin, or a resin containing at least one of oxygen, nitrogen, sulfur, and halogen in the molecule, and more preferably a resin containing at least one of an ether bond, an ester bond, and an amide bond in the resin.

A preferred polar resin is at least one selected from the group consisting of a polyamide-based resin, such as nylon 6, nylon 66, nylon 610, nylon 9, nylon 6/66, nylon 66/610, nylon 6/11, nylon 6/12, nylon 12, nylon 46, and amorphous nylon; a polyester-based resin, such as polyethylene terephthalate, polyethylene naphthalate, and polybutylene terephthalate; a polyacetal-based resin, such as a polyoxymethylene homopolymer and a polyoxymethylene copolymer; a polyphenylene sulfide-based (PPS) resin, a polyphenylene ether-based resin, a polyarylate-based resin, a polyether sulfone-based resin, a polyurethane-based resin, a polyvinyl alcohol-based resin, a polycarbonate-based resin, an ethylene/vinyl acetate copolymer, an ethylene/methacrylic acid copolymer, polyether ketone, polyether ether ketone, polyvinyl chloride, polyvinylidene chloride, polyacrylonitrile, triacetyl cellulose, an ABS resin, an AS resin, an ACS resin, a xylene resin, an acrylic resin, and a polyester-based thermoplastic elastomer.

More preferably, the polar resin is at least one selected from a polyamide-based resin, a polyacetal-based resin, a polyurethane-based resin, a polyvinyl alcohol-based resin, a polyester-based resin, a polyphenylene ether-based resin, a polyphenylene sulfide-based resin, a polycarbonate-based resin, and a polyester-based thermoplastic elastomer, and still more preferably, it is at least one resin selected from a polyamide-based resin, a polyvinyl alcohol-based resin, a polyester-based resin, a polyphenylene ether-based resin, a polyphenylene sulfide-based resin, and a polycarbonate-based resin.

The polyester-based thermoplastic elastomer used as the polar resin (C) can be obtained by polycondensing an oligomer obtained by an esterification reaction or a transesterification reaction using, for example, (i) an aliphatic and/or alicyclic diol having 2 to 12 carbon atoms, (ii) an aromatic dicarboxylic acid or an alkyl ester thereof, and (iii) a polyalkylene ether glycol as raw materials.

Examples of commercially available polyester-based thermoplastic elastomers include Hytrel 3046 (registered trademark) manufactured by DuPont-Toray Co., Ltd.

### <Additive>

The resin composition (D2) may contain various additives within a range that does not impair the effects of the present invention. Examples of such additives include those described for the resin composition (D1).

The content of the additive in the resin composition (D2) is not limited and can be adjusted as appropriate depending on the type of the additive, the application of the resin composition (D2), etc. When the resin composition (D2) contains the additive, the content of the additive may be, for example, based on a total mass of the resin composition (D2), 50% by mass or less, 45% by mass or less, 30% by mass or less, 20% by mass or less, and 10% by mass or less, and may be 0.01% by mass or more, 0.1% by mass or more, 1% by mass or more, and 5% by mass or more. In other words, the content of the additive in the resin composition (D2) is preferably 0.01 to 50% by mass.

### <Proportion of Each Component in Resin Composition (D2)>

The proportion of the modified hydrogenated product (A) in the resin composition (D2) is preferably 1 to 30% by mass based on the total mass of the resin composition (D2). From the viewpoint of the balance between the compatibility and mechanical properties of the composition, the proportion is more preferably 2 to 20% by mass, still more preferably 3 to 15% by mass, and even more preferably 3 to 10% by mass.

In addition, from the viewpoint of sufficiently developing adhesiveness, etc., the total mass of the modified hydrogenated product (A) and the polyolefin-based resin (B) contained in the resin composition (D2) is preferably 50% by mass or more, more preferably 65% by mass or more, still more preferably 70% by mass or more, even more preferably 80% by mass or more, and particularly preferably 90% by mass or more. The upper limit of the total mass is not particularly limited and may be 99.9% by mass, or 99.5% by mass. In other words, the total mass of the modified hydrogenated product (A) and the polyolefin-based resin (B) contained in the resin composition (D2) is preferably 50 to 99.9% by mass.

The proportion of the polar resin (C) in the resin composition (D2) is preferably 10 to 90% by mass based on the total mass of the resin composition (D2). From the viewpoint of flexibility of the composition, the proportion is more preferably 10 to 50% by mass, still more preferably 10 to 45% by mass, and even more preferably 10 to 40% by mass. In addition, from the viewpoint of mechanical strength, the proportion is more preferably 50 to 90% by mass, still more preferably 50 to 85% by mass, and even more preferably 50 to 80% by mass, based on the total mass of the resin composition (D2).

Further, when the mass of the polyolefin-based resin (B) in the resin composition (D2) is X and the mass of the polar resin (C) is Y, it is preferable that X/Y is 90/10 to 10/90.

More specifically, from the viewpoint of flexibility of the resin composition (D2), X/Y is preferably 90/10 to 50/50, more preferably 90/10 to 55/45, even more preferably 90/10 to 60/40, still more preferably 90/10 to 70/30, and particularly preferably 90/10 to 75/25. In addition, from the viewpoint of mechanical strength of the resin composition (D2), X/Y is preferably 50/50 to 10/90, more preferably 50/50 to 15/85, still more preferably 50/50 to 20/80, even more preferably 50/50 to 30/70, and particularly preferably 50/50 to 25/75.

By having X/Y within the above range, the respective physical properties of the polyolefin-based resin (B) and the polar resin (C) are utilized, and mechanical properties such as tensile strength, tensile strain at break, and impact resistance can be improved in a well-balanced manner.

The total proportion of the polyolefin-based resin (B) and the polar resin (C) in the resin composition (D2) is preferably 50% by mass or more, more preferably 65% by mass or more, and even more preferably 70% by mass or more, and the upper limit thereof may be 97% by mass, 95% by mass, or 90% by mass.

In addition to the modified hydrogenated product (A), the polyolefin-based resin (B), and the polar resin (C), the resin composition (D2) may further contain a block copolymer (A0) and a hydrogenated product (A1) thereof. From the viewpoint of mechanical properties, the total content of the block copolymer (A0) and the hydrogenated product (A1) thereof is preferably 1 to 20% by mass, more preferably 1% to 10% by mass, and still more preferably 1 to 5% by mass, based on the total mass of the resin composition (D2). On the other hand, it is also one of the preferred embodiments that the resin composition (D2) is a composition that does not contain the block copolymer (A0) and the hydrogenated product (A1) thereof at all.

The resin composition (D2) may contain resin components other than those mentioned above. For example, a nonpolar resin other than the polyolefin-based resin (B) may be contained.

From the viewpoint of ensuring the mechanical properties of the resin composition (D2), the content of a resin component other than the modified hydrogenated product (A), the polyolefin-based resin (B), the polar resin (C), the block copolymer (A0) and the hydrogenated block copolymer (A1) in the resin composition (D2) is preferably 0 to 50% by mass, more preferably 0 to 30% by mass, even more preferably 0 to 20% by mass, still more preferably 0 to 10% by mass, and most preferably 0 to 5% by mass.

### <Characteristics of Resin Composition (D2)>

### (Tensile Strength)

From the viewpoint of mechanical strength, the tensile strength of the resin composition (D2) is preferably 9 MPa to 35 MPa, more preferably 15 MPa to 30 MPa, and still more preferably 20 MPa to 30 MPa. The upper limit of the tensile strength is not particularly limited and can be determined as appropriate depending on the application.

The tensile strength can be measured by preparing a test piece with a length of 150 mm and a width of 15 mm at a tensile speed of 500 mm/min in accordance with JIS K7127:1999, as described in Examples described later. When the tensile strength is within the above range, the material will have excellent strength.

### (Tensile Strain at Break)

From the viewpoint of mechanical strength, the tensile strain at break of the resin composition (D2), which is measured by preparing a test piece with a length of 150 mm and a width of 15 mm at a tensile speed of 500 mm/min in accordance with JIS K7127:1999, as described in Examples described later, is preferably 25% or more, more preferably 30% or more, even more preferably 50% or more, still more preferably 75% or more, further more preferably 100% or more, even further more preferably 150% or more, still further more preferably 200% or more, yet more preferably 250% or more, and still yet more preferably 300% or more. When the tensile strain at break is within the above range, the flexibility and stretchability will be excellent.

### (Tensile Impact Resistance)

The tensile impact strength of the resin composition (D2) can be evaluated by preparing a 3-shaped test piece in a TD direction from a film obtained from the resin composition (D2), and then measuring the tensile impact value (kJ/m²) in the TD direction with a hammer load of 4 J using an "Impact Tester IT" manufactured by Toyo Seiki Seisakusho in accordance with JIS K7160-1996-A (in-base method), as described in Examples described later.

The tensile impact value obtained by the measurement is preferably 650 kJ/m² to 2000 kJ/m², more preferably 700 kJ/m² to 1900 kJ/m², and still more preferably 750 kJ/m² to 1800 kJ/m². When the tensile impact value is within the above range, the impact resistance will be excellent.

### (Haze)

The haze (%) of the resin composition (D2), which is measured on a film obtained from the resin composition (D2) using "HR-100" manufactured by Murakami Color Research Institute Co., Ltd. in accordance with JIS K7136:2000 as described in Examples described later, is preferably 90% or less, more preferably 70% or less, and still more preferably 50% or less. When the haze is within the above range, the transparency will be excellent.

### (Flexural Modulus)

The flexural modulus of the resin composition (D2), which is measured by cutting both ends of an ISO multi-purpose test piece to prepare a test piece with a length of 80 mm, a width of 10 mm, and a thickness of 4 mm, and measuring at a test speed of 2 mm/min using Autograph AGX-V (manufactured by Shimadzu Corporation) in accordance with JIS K7171:2016 (ISO 178:2010) as described in Examples described later, is preferably 950 MPa or more, more preferably 980 MPa or more, and even more preferably 1000 MPa or more. When the flexural modulus is within the above range, the rigidity will be excellent.

### (Bending Strength)

The bending strength of the resin composition (D2), which is measured by cutting both ends of an ISO multi-purpose test piece to prepare a test piece with a length of 80 mm, a width of 10 mm, and a thickness of 4 mm, and measuring at a test speed of 2 mm/min using Autograph AGX-V (manufactured by Shimadzu Corporation) in accordance with JIS K7171:2016 (ISO 178:2010) as described in Examples described later, is preferably 20 MPa or more, more preferably 25 MPa or more, and even more preferably 30 MPa or more. When the bending strength is within the above range, the rigidity will be excellent.

### (Charpy Impact Value)

The Charpy impact value of the resin composition (D2), which is measured by cutting both ends of an ISO multi-purpose test piece to prepare a test piece with a length of 80 mm, a width of 10 mm, and a thickness of 4 mm, and notching the center of the test piece to obtain a test piece with a remaining width of 8 mm, then measuring the Charpy impact value at 23°C with a hammer load of 2 J using a digital impact tester model IT (manufactured by Toyo Seiki Seisakusho Co., Ltd.) in accordance with JIS K7111-1:2012 as described in Examples described later, is preferably 5 kJ/m² or more, and more preferably 25 kJ/m² or more. When the Charpy impact value is within the above range, the impact resistance will be excellent.

### <Method for Producing Resin Composition (D2)>

The resin composition (D2) can be produced by mixing the modified hydrogenated product (A), the polyolefin-based resin (B), and the polar resin (C), or the resin composition (D1) and the polar resin (C), with various additives as necessary using a mixer , such as a Henschel mixer, a V blender, a ribbon blender, a tumbler blender, and a conical blender, or can be produced by subsequently melt-kneading at approximately 80 to 350°C using a kneading machine, such as a single-screw extruder, a twin-screw extruder, a kneader, a Banbury mixer, and a roll.

The resin composition (D2) can also be prepared by dissolving each component in a solvent in which at least the modified hydrogenated product (A), the polyolefin-based resin (B), and the polar resin (C) are soluble, mixing the components, and removing the solvent.

The resin composition (D2) can be made into any shape, such as veil, crumb, and pellet. In addition, the resin composition (D2) can be made into various molded articles by a melt-kneading molding machine, or by an injection molding method, an injection compression molding method, an extrusion molding method, a blow molding method, a press molding method, a vacuum forming method, a foam molding method, etc., using a veil, crumb, or pellet of the resin composition as a raw material.

There is no restriction on the order of addition. However, from the viewpoint of further improving the dispersibility and physical properties of the resulting resin composition (D2), it is preferable that the polyolefin-based resin (B) is added after the modified hydrogenated product (A) and the polar resin (C) are added.

### <Application of Resin Composition (D2)>

The resin composition (D2) can be used for various purposes.

The resin composition (D2) of the present embodiment has well-balanced mechanical properties such as tensile strength, tensile strain at break, and impact resistance, and can be used for various purposes. Therefore, the present invention also provides a film, a sheet, etc. using the resin composition (D2).

Further, the resin composition (D2) can also be used for various automotive parts in the automotive field, for example, cooling parts, such as thermostat housings, radiator tanks, radiator hoses, water outlets, water pump housings, and rear joints; intake and exhaust system parts, such as intercooler tanks, intercooler cases, turbo duct pipes, EGR cooler cases, resonators, throttle bodies, intake manifolds, and tail pipes; fuel system parts, such as fuel delivery pipes, gasoline tanks, quick connectors, canisters, pump modules, fuel piping, oil strainers, lock nuts, and sealing materials; structural parts, such as mount brackets, torque rods, and cylinder head covers; drive system parts, such as bearing retainers, gear tensioners, headlamp actuator gears, HVAC gears, sliding door rollers, and clutch peripheral parts; brake system parts such as air brake tubes; in-vehicle electrical parts, such as wire harness connectors in the engine compartment, motor parts, sensors, ABS bobbins, combination switches, in-vehicle switches, and electronic control unit (ECU) boxes; and interior and exterior parts, such as sliding door dampers, door mirror stays, door mirror brackets, inner mirror stays, roof rails, engine mount brackets, air cleaner inlet pipes, door checkers, plastic chains, emblems, clips, breaker covers, cup holders, airbags, fenders, spoilers, radiator supports, radiator grills, louvers, air scoops, hood bulges, back doors, fuel sender modules, floor mats, instrument panels, dashboards, dash insulators, dam rubbers, weather strips, and tires.

In addition, the resin composition (D2) can also be used for sealing materials, adhesives, pressure-sensitive adhesives, packings, O-rings, belts, soundproofing materials, etc. in various electrical products in the field of home appliances, such as TVs, Blu-ray recorders, HDD recorders and other various recorders, projectors, game consoles, digital cameras, home videos, antennas, speakers, electronic dictionaries, IC recorders, fax machines, copy machines, telephones, door phones, rice cookers, microwaves, microwave ovens, refrigerators, dishwashers, dish dryers, IH cooking heaters, hot plates, vacuum cleaners, washing machines, chargers, sewing machines, irons, dryers, electric bicycles, air purifiers, water purifiers, electric toothbrushes, lighting equipment, air conditioners, outdoor units of air conditioners, dehumidifiers, and humidifiers. It can also be used as fiber.

### Examples

Hereinafter, the present invention will be described specifically by Examples, etc.; however, the present invention is not limited thereto.

A method for evaluating the physical properties of block copolymers, hydrogenated products of the block copolymers, and modified hydrogenated products obtained in the production examples described later is shown below.

¹H-NMR measurement was performed using the following apparatus and measurement conditions unless otherwise specified.
- Apparatus: Nuclear magnetic resonance device "AVANCE 400 Nanobay" (manufactured by Bruker)
- Solvent: CDCl₃
- Measurement temperature: 30°C
- Accumulated number of times: 1024 times
- Sample concentration: 50 mg/ml

### [Method for Measuring Each Physical Property]

### <Content of Polymer Block (A-1)>

¹H-NMR measurement of a block copolymer before hydrogenation was performed, and the content of the polymer block (A-1) was calculated from the ratio of the peak intensity derived from styrene and the peak intensity derived from diene.

### <Weight Average Molecular Weight (Mw) and Molecular Weight Distribution (Mw/Mn)>

The weight average molecular weight (Mw) in terms of polystyrene and the molecular weight distribution (Mw/Mn) of the polymer block (A-1), the polymer block (A-2), the block copolymer (A0), the hydrogenated product of the block copolymer, and modified hydrogenated product were determined by gel permeation chromatography (GPC) measurement under the following conditions.

### (GPC Measurement Apparatus and Measurement Condition)

- Apparatus: GPC device "HLC-8020" (manufactured by Tosoh Corporation)
- Separation column: "TSKgel GNMXL", "G4000HXL", and "G5000HXL" manufactured by Tosoh Corporation were connected in series.
- Eluent: Tetrahydrofuran
- Eluent flow rate: 0.7 mL/min
- Sample concentration: 5 mg/10mL
- Column temperature: 40°C
- Detector: Differential refractive index (RI) detector
- Calibration curve: Created using standard polystyrene

### <Hydrogenation Rate in Polymer Blocks (A-2) and (A-3)>

The hydrogenation rate of carbon-carbon double bonds in the structural unit derived from the conjugated diene in the block copolymer (the hydrogenation rate in the polymer blocks (A-2) and (A-3)) was calculated from a peak of protons of carbon-carbon double bonds appearing at 4.5 to 6.0 ppm in an obtained spectrum using the following formula. Hydrogenation rate (mol%) = {1 = (number of moles of carbon-carbon double bonds contained per 1 mole of hydrogenated block copolymer) / (number of moles of carbon-carbon double bonds contained per 1 mole of unhydrogenated block copolymer)} × 100

### <Vinyl Bonding Amount in Polymer Block (A-2)>

¹H-NMR measurement of the polymer block (A-2) sampled during polymerization was performed, and the vinyl bonding amount (total content of 3,4-bond unit and 1,2-bond unit) was calculated from the ratio of a peak area corresponding to the 3,4-bond unit in the isoprene structural unit to a total peak area of structural units derived from isoprene and butadiene, the ratio of a peak area corresponding to the 1,2-bond unit in the isoprene structural unit to the total peak area of structural units derived from isoprene and butadiene, and the ratio of a peak area corresponding to the 1,2-bond unit in the butadiene structural unit to the total peak area of structural units derived from isoprene and butadiene.

### <Vinyl Bonding Amount in Polymer Block (A-3)>

¹H-NMR measurement of the block copolymer before hydrogenation was performed, and the vinyl bonding amount (total content of 3,4-bond unit and 1,2-bond unit) of the block copolymer was calculated from the ratio of the peak area corresponding to the 3,4-bond unit in the isoprene structural unit to the total peak area of structural units derived from isoprene and butadiene, the ratio of the peak area corresponding to the 1,2-bond unit in the isoprene structural unit to the total peak area of structural units derived from isoprene and butadiene, and the ratio of the peak area corresponding to the 1,2-bond unit in the butadiene structural unit to the total peak area of structural units derived from isoprene and butadiene. Then, ¹H-NMR measurement of the polymer block (A-2) sampled during the polymerization was performed, and the vinyl bonding amount (total content of 3,4-bond unit and 1,2-bond unit) of the polymer block (A-2) was calculated from the ratio of the peak area corresponding to the 3,4-bond unit in the isoprene structural unit to the total peak area of structural units derived from isoprene and butadiene, the ratio of the peak area corresponding to the 1,2-bond unit in the isoprene structural unit to the total peak area of structural units derived from isoprene and butadiene, and the ratio of the peak area corresponding to the 1,2-bond unit in the butadiene structural unit to the total peak area of structural units derived from isoprene and butadiene. The vinyl bonding amount in the polymer block (A-3) was calculated using the following formula. Vinyl bonding amount in polymer block (A-3) = [vinyl bonding amount in block copolymer × {polymer block (A-2) content (parts by mass) + polymer block (A-3) content (parts by mass)} - vinyl bonding amount in polymer block (A-2) × polymer block (A-2) content (parts by mass)] / polymer (A-3) content (parts by mass)

### < Modification Amount (phr)>

The maleic anhydride modification amount of modified hydrogenated products (Y-1) to (Y-3) described later was measured using the following procedure. After dissolving 5 g of each modified hydrogenated product in 180 ml of toluene, 20 ml of ethanol was added, titration was performed with a 0.1 mol/L potassium hydroxide solution, and the modification amount was calculated using the following calculation formula. Maleic anhydride modification amount (phr) = titration amount × 5.611 / sample amount × 98 × 100 / 56.11 × 1000

### <Modification Amount (mol%)>

The modification amount (mol%) was calculated from the maleic anhydride modification amount (phr) calculated above using the following calculation formula. Maleic anhydride modification amount (mol%) = {maleic anhydride modification amount (phr) / maleic anhydride molecular weight} / {maleic anhydride modification amount (phr) / maleic anhydride molecular weight + polymer block (A) content / molecular weight of polymer block (A) structural unit + polymer block (B) content / molecular weight of polymer block (B) structural unit} × 100

### <Dynamic Viscoelasticity Measurement (tan δ)>

Each of the modified hydrogenated products (Y-1) to (Y-3) described later was preheated at 230°C for 1 minute using a press molding machine "NF-50H" (manufactured by Shinto Metal Industry Co., Ltd.), and then pressed at the same temperature with a pressure of 10 MPa for 3 minutes through a spacer to produce a single layer sheet with a thickness of 1.0 mm. The single layer sheet was cut into a disk shape, and this was used as a test sheet.

For the measurement, a distortion-controlled dynamic viscoelastometer "ARES-G2" (manufactured by TA Instruments Japan Inc.) with a disc diameter of 8 mm was used as a parallel plate vibration rheometer based on JIS K 7244-10:2005.

A gap between two flat plates was completely filled with the test sheet, and vibration was applied to the test sheet at a frequency of 1 Hz in shear mode at a strain amount of 0.1%. The temperature was raised from -70°C to +200°C at a constant rate of 3°C/min, and a maximum value of a peak intensity of tan δ (peak top intensity) and a temperature at which the maximum value was obtained (peak top temperature) were determined.

### <Melt Flow Rate (MFR)>

The MFR of the modified hydrogenated products (Y-1) to (Y-3) described later was measured under conditions of a temperature of 230°C and a load of 21 N using a melt indexer (MELT INDEXER L241 manufactured by Tateyama Kagaku High-Technologies Co., Ltd.) in accordance with JIS K7210:2014.

### 1. Production Example and Evaluation of Modified Hydrogenated Product

### [Example 1-1]

### (Production of Modified Hydrogenated Product (Y-1))

(1) In a pressure-resistant container that has been purged with nitrogen and dried, 50 kg of cyclohexane was charged as a solvent, and 200 g of a cyclohexane solution of sec-butyllithium with a concentration of 10.5% by mass was charged as an anionic polymerization initiator (actual amount of sec-butyllithium added: 21 g).
   After raising the temperature inside the pressure-resistant container to 50°C, 1.5 kg of styrene (1) was added and polymerized for 1 hour, and with a temperature inside the container of 50°C, a mixed solution of 7.2 kg of isoprene and 4.8 kg of butadiene was added for 5 hours and then polymerized for 2 hours. Furthermore, 1.5 kg of styrene (2) was added and polymerized for 1 hour to obtain a reaction solution containing a polystyrenepoly(isoprene/butadiene)-polystyrene triblock copolymer.
(2) A Ziegler-based hydrogenation catalyst formed from nickel octylate and trimethylaluminum was added to the reaction solution in a hydrogen atmosphere, and the mixture was reacted at a hydrogen pressure of 1 MPa and a temperature of 80°C for 5 hours. After the reaction solution was allowed to cool and depressurize, the catalyst was removed by washing with water and dried under vacuum to obtain a hydrogenated product of the polystyrenepoly(isoprene/butadiene)-polystyrene triblock copolymer (hereinafter referred to as Y'-1).
(3) Using a twin screw extruder "ZSK26mc" (26 mmϕ, LID = 56) manufactured by Coperion at 230°C, 10 kg of the hydrogenated block copolymer Y'-1 obtained above was blended into a molten state, and 0.02 kg of 2,5-dimethyl-2,5-di(t-butylperoxy)hexane (initiator 1: Perhexa 25B-40, manufactured by NOF Corporation) as a radical initiator and 0.15 kg of maleic anhydride as a modifier were blended to carry out a modification reaction. A discharged product from the twin screw extruder was pelletized using an underwater cutter to obtain the modified hydrogenated product (Y-1) as pellets.

### [Example 1-2]

### (Production of Modified Hydrogenated Product (Y-2))

(1) In a pressure-resistant container that has been purged with nitrogen and dried, 50 kg of cyclohexane was charged as a solvent, and 210 g of a cyclohexane solution of sec-butyllithium with a concentration of 10.5% by mass was charged as an anionic polymerization initiator (actual amount of sec-butyllithium added: 22.05 g).
   After raising the temperature inside the pressure-resistant container to 50°C, 1.5 kg of styrene (1) was added and polymerized for 1 hour, and with a temperature inside the container of 50°C, 100 g of tetrahydrofuran was added as a Lewis base, and 11.9 kg of butadiene was added for 3 hours and then polymerized for 2 hours. Furthermore, 1.5 kg of styrene (2) was added and polymerized for 1 hour to obtain a reaction solution containing a polystyrenepolybutadiene-polystyrene triblock copolymer.
(2) A Ziegler-based hydrogenation catalyst formed from nickel octylate and trimethylaluminum was added to the reaction solution in a hydrogen atmosphere, and the mixture was reacted at a hydrogen pressure of 1 MPa and a temperature of 80°C for 5 hours. After the reaction solution was allowed to cool and depressurize, the catalyst was removed by washing with water and dried under vacuum to obtain a hydrogenated product of the polystyrene-polybutadiene-polystyrene triblock copolymer (hereinafter referred to as Y'-2).
(3) The modified hydrogenated product (Y-2) was obtained as pellets in the same manner as in (3) of Example 1-1 except that the hydrogenated block copolymer Y'-2 obtained above was subj ected to a modification reaction with the amount of maleic anhydride changed to the amount shown in Table 1.

### [Example 1-3]

### (Production of Modified Hydrogenated Product (Y-3))

(1) In a pressure-resistant container that has been purged with nitrogen and dried, 50 kg of cyclohexane was charged as a solvent, and 130 g of a cyclohexane solution of sec-butyllithium with a concentration of 10.5% by mass was charged as an anionic polymerization initiator (actual amount of sec-butyllithium added: 13.65 g).
   After raising the temperature inside the pressure-resistant container to 50°C, 1.1 kg of styrene (1) was added and polymerized for 1 hour, and with a temperature inside the container of 50°C, a mixed solution of 4.1 kg of isoprene and 3.6 kg of butadiene was added for 4 hours and then polymerized for 2 hours. Furthermore, 1.1 kg of styrene (2) was added and polymerized for 1 hour, and with a temperature inside the container of 40°C, 300 g of tetrahydrofuran was added as a Lewis base, and a mixed solution of 1.3 kg of isoprene and 1.2 kg of butadiene was further added for 1 hour and then polymerized for 2 hours to obtain a reaction solution containing a polystyrene-poly(isoprene/butadiene)-polystyrene-poly(isoprene/butadiene) tetrablock copolymer.
(2) A Ziegler-based hydrogenation catalyst formed from nickel octylate and trimethylaluminum was added to the reaction solution in a hydrogen atmosphere, and the mixture was reacted at a hydrogen pressure of 1 MPa and a temperature of 80°C for 5 hours. After the reaction solution was allowed to cool and depressurize, the catalyst was removed by washing with water and dried under vacuum to obtain a hydrogenated product of the polystyrenepoly(isoprene/butadiene)-polystyrene- poly(isoprene/butadiene) tetrablock copolymer (hereinafter referred to as Y'-3).
(3) The modified hydrogenated product (Y-3) was obtained as pellets in the same manner as in (3) of Example 1-1 except that the modification reaction was carried out using the hydrogenated block copolymer Y'-3 obtained above.

Measurements of various physical properties of each of the block copolymers, the hydrogenated products of the block copolymers, and the modified hydrogenated products obtained in Example 1-1, Example 1-2, and Example 1-3 were carried out according to the measurement procedures described above.

The measurement results are shown in Table 1 along with compositions thereof.

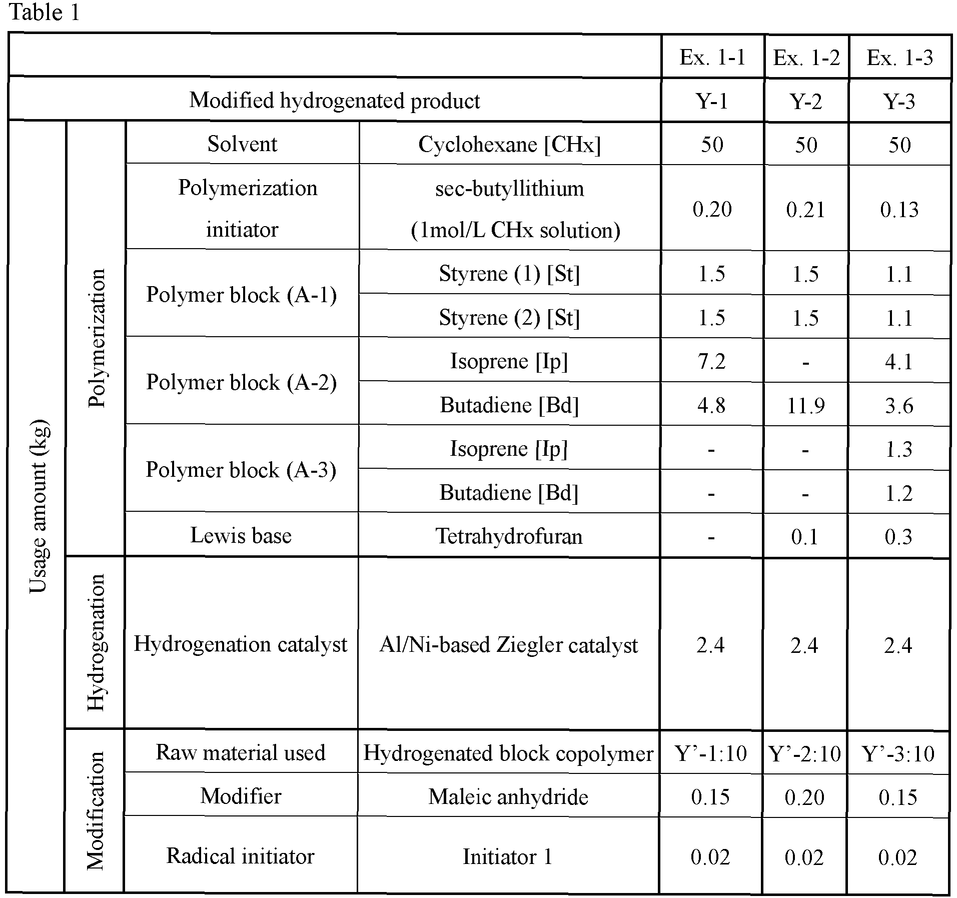

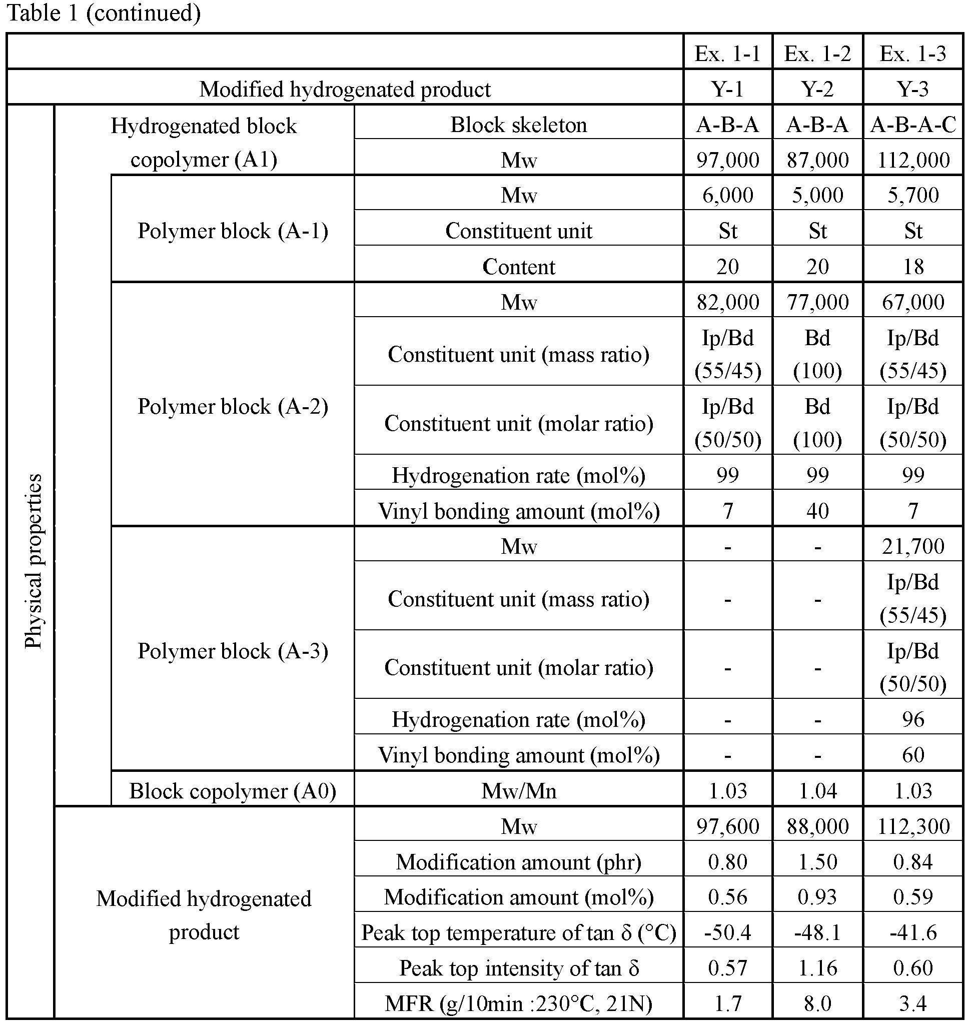

As shown in Table 1, the vinyl bonding amount of the polymer block (A-2) of the modified hydrogenated product (Y-1) of Example 1-1 and the vinyl bonding amount of the polymer block (A-2) of the modified hydrogenated product (Y-3) of Example 1-3 are 7 mol%, whereas the vinyl bonding amount of the polymer block (A-2) of the modified hydrogenated product (Y-2) of Example 1-2 is 40 mol%. In addition, the modified hydrogenated product (Y-1) exhibits a peak top intensity of tan δ of 0.57, and the peak top temperature of tan δ is lower than that of the modified hydrogenated product (Y-2), indicating that it has excellent elasticity. Furthermore, the modified hydrogenated product (Y-3) exhibits a peak top intensity of tan δ of 0.60, and the peak top temperature of tan δ is lower than that of the modified hydrogenated product (Y-2), indicating that it has excellent elasticity.

Moreover, since the MFR of the modified hydrogenated products (Y-1) and (Y-3) is lower than that of the modified hydrogenated product (Y-2), shearing during kneading is more likely to occur, and the resin compositions (D1) and (D2) are better dispersed.

Therefore, it can be said that the modified hydrogenated products (Y-1) and (Y-3) have better elasticity and better dispersibility of the resin composition than those of the modified hydrogenated product (Y-2).

### 2. Production Example and Evaluation of Resin Composition

### [Examples 2-1 to 2-7]

With the blending shown in Table 2, melt-kneaded products of resin compositions 1 to 7 were extruded from T-die (hanger coat die; lip width 300 mm, lip thickness 1 mm) through a single screw extruder (main: "GM-30" manufactured by GM Engineering Co., Ltd., L/D = 28) (secondary: "GM-25" manufactured by GM Engineering Co., Ltd., L/D = 25) and molded into films at the film thicknesses, molding temperatures, and winding speeds shown in Table 2.

The components used to prepare each resin composition are as follows.

### [Modified Hydrogenated Product (A)]

- Modified hydrogenated product Y-1
- Modified hydrogenated product Y-2
- Modified hydrogenated product Y-3

### [Polyolefin-based Resin (B)]

- Polyolefin 1: Low density polyethylene ("Novatec LD LF443" (trade name, Novatec is a registered trademark), manufactured by Japan Polyethylene Corporation, melt index (MI) = 1.5 g/10 min)
- Polyolefin 2: Random polypropylene ("Prime Polypro F327" (trade name), manufactured by Prime Polymer Co., Ltd., melt index (MI) = 7 g/10 min)

### [Polar Resin (C)]

- Polyamide: Polyamide 6 ("UBE nylon 1013B" (trade name), manufactured by Ube Corporation)

### [Antioxidant]

- Antioxidant 1: Phenolic antioxidant ("ADEKA STAB AO-60" (trade name), manufactured by ADEKA Corporation)

The following physical properties were measured for the films obtained from the resin compositions 1 to 7.

### <Tensile Strength and Tensile Strain at Break>

A test piece with a length of 150 mm and a width of 15 mm, with the length in the TD direction, was prepared from the film obtained from the resin composition of each example, and the tensile strength (MPa) in the TD direction and the tensile strain at break (%) were measured at a tensile speed of 500 mm/min using an Autograph (manufactured by Shimadzu Corporation) in accordance with JIS K7127:1999.

In Table 2, the tensile strength is preferably 9.0 MPa or more, more preferably 17.0 MPa or more, and the tensile strain at break is preferably 50% or more, more preferably 200% or more.

### <Tensile Impact Value>

From the film obtained from the resin composition of each example, a 3-shaped test piece was prepared in the TD direction in accordance with JIS K7160-1996-A (in-base method), and the tensile impact value (kJ/m²) in the TD direction was measured with a hammer load of 4 J using an "Impact Tester IT" manufactured by Toyo Seiki Seisakusho.

In Table 2, the tensile impact value is preferably 650 kJ/m² or more, more preferably 750 kJ/m² or more.

### <Haze>

The haze (%) of the film obtained from the resin composition of each example was measured using "HR-100" manufactured by Murakami Color Research Institute Co., Ltd. in accordance with JIS K7136:2000.

### <Observation Using Transmission Electron Microscope (TEM)>

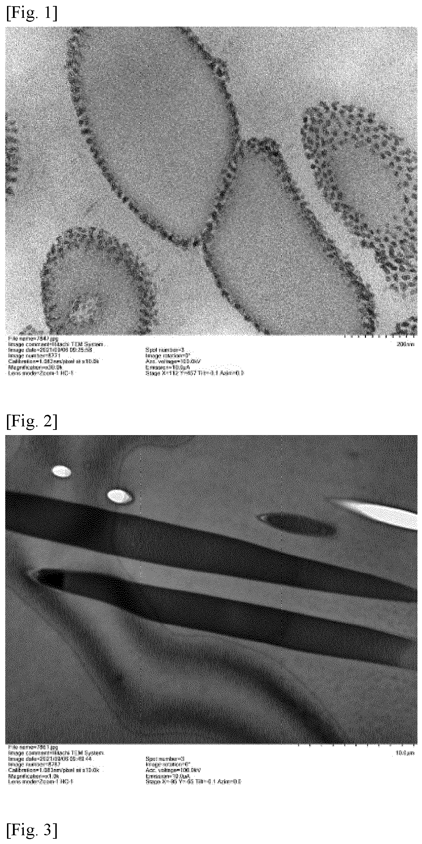

To observe the morphology of the resin compositions 1, 3, and 4, thin films were cut using an ultramicrotome (trade name: Leica EM FC7, manufactured by Leica Microsystem), and then stained with a 0.5% ruthenium tetroxide aqueous solution to prepare samples, and the samples were observed using a transmission electron microscope (TEM) (trade name: HT7700, manufactured by Hitachi High-Tech Corporation). Transmission electron microscopy (TEM) photographs of each sample are shown in Figs. 1 to 3.

The types and usage amounts of each component to produce the resin compositions 1 to 7, film molding conditions, and physical property measurement results are shown in Table 2 below.

Examples 2-1 to 2-2 and 2-7 correspond to Examples, and Examples 2-3 to 2-6 correspond to Comparative Examples.

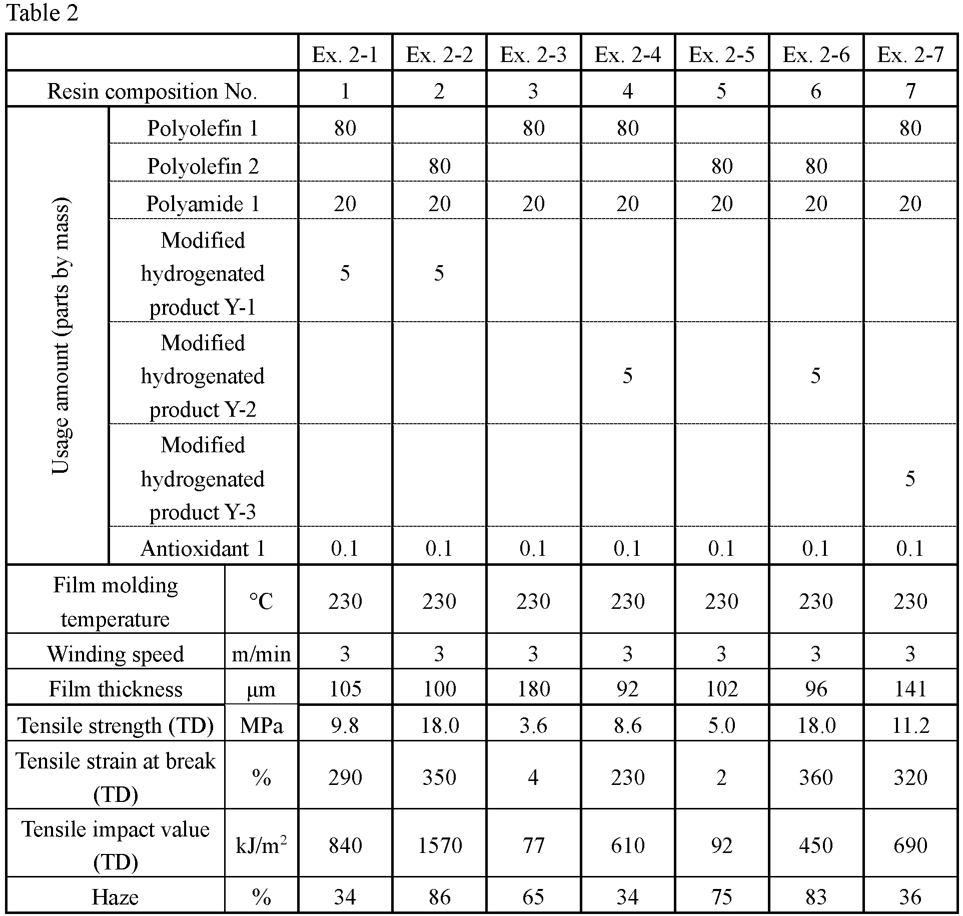

It can be seen from Table 2 that the films obtained from the resin compositions 1 to 2 and 7 have a better balance of tensile strength, tensile strain at break, and impact resistance than those of the films obtained from the resin compositions 3 to 6. Furthermore, it can be seen that the resulting films of the resin compositions 1 and 7 using low-density polyethylene as the polyolefin-based resin also have excellent transparency.

When the resin compositions 1 to 2 and 7 containing the modified hydrogenated product of the present invention are compared with the resin compositions 3 and 5 that do not contain the modified hydrogenated product, it can be seen that the tensile strain at break is significantly improved and the resin compositions have high tensile strength. It is presumed that this is because the modified hydrogenated product of the present invention has a good effect as a compatibilizer, and as a result, the modified hydrogenated product forms a core-shell structure with a layer of several nanometers thick around the polyamide, which is a polar resin; as the core-shell structure polyamide is finely dispersed in the polyolefin, the interfacial strength was improved.

In addition, it can be seen that, when the resin compositions 1 to 2 and 7 containing the modified hydrogenated product of the present invention are compared with the resin compositions 4 and 6 containing the modified hydrogenated product that do not meet the provisions of the present invention, the resin compositions of Examples tend to have higher tensile impact values. It is presumed that this is because the compatibility of the modified hydrogenated product that does not meet the provisions of the present invention is different from that of the modified hydrogenated product of the present invention, and the dispersion of the polar resin (C) is uneven, and the dispersion diameter is also different.

### [Examples 3-1 to 3-7]

With the blending shown in Table 3, resin compositions 8 to 14 were prepared by melt-kneading using a twin screw extruder "ZSK26mc" (26 mmϕ, LID = 56) manufactured by Coperion at a cylinder temperature of 250°C, a screw rotation of 300 rpm, and a discharge rate of 10 kg/h. Using the resulting resin compositions, an ISO multi-purpose A1 test piece was prepared under the conditions of a cylinder temperature of 250°C and a molding temperature of 80°C using an injection molding machine "EC-75SX" manufactured by Toshiba Machinery Co., Ltd.

The components used to prepare each resin composition are as follows.

### [Modified Hydrogenated Product (A)]

- Modified hydrogenated Product Y-1
- Modified hydrogenated Product Y-2
- Modified hydrogenated Product Y-3

### [Polyolefin-based Resin (B)]

- Polyolefin 3: Random polypropylene ("Prime Polypro" J226T, manufactured by Prime Polymer Co., Ltd., melt index (MI) = 20 g/10 min)

### [Polar Resin (C)]

- Polybutylene terephthalate: "TORAYCON 1401" (trade name), manufactured by Toray Industries, Inc.
- Polycarbonate: "Iupilon S3000" (trade name), manufactured by Mitsubishi Engineering Plastics Corporation

### [Antioxidant]

- Antioxidant 1: Phenolic antioxidant ("ADEKA STAB AO-60" (trade name), manufactured by ADEKA Corporation)

The following physical properties were measured for the test pieces obtained from the resin compositions 8 to 14.

### <Tensile Strength and Tensile Strain at Break>

The tensile strength (MPa) and tensile strain at break (%) were measured under the conditions of a test speed of 50 mm/min, a distance between chucks of 115 mm, and a distance between gauge lines of 50 mm using Autograph AGX-V (manufactured by Shimadzu Corporation) in accordance with JIS K7161-1:2014 (ISO 527-1:2012). The measurement results are shown in Table 3.

In Table 3, the tensile strength is preferably 15 MPa or more, more preferably 17 MPa or more, and the tensile strain at break is preferably 50% or more, more preferably 200% or more.

### <Flexural Modulus and Bending Strength>

Both ends of the ISO multi-purpose test piece were cut to prepare a test piece with a length of 80 mm, a width of 10 mm, and a thickness of 4 mm, and the flexural modulus (MPa) and bending strength (MPa) were measured at a test speed of 2 mm/min using Autograph AGX-V (manufactured by Shimadzu Corporation) in accordance with JIS K7171:2016 (ISO 178:2010). The measurement results are shown in Table 3.

### <Charpy Impact Value>

Both ends of the ISO multi-purpose test piece were cut to create a test piece with a length of 80 mm, a width of 10 mm, and a thickness of 4 mm, and a notch was cut in the center of the test piece to obtain a test piece with a remaining width of 8 mm. Using the above test piece, the Charpy impact value (kJ/m²) at 23°C was measured with a hammer load of 2 J using a digital impact tester model IT (manufactured by Toyo Seiki Seisakusho Co., Ltd.) in accordance with JIS K7111-1:2012. The measurement results are shown in Table 3.

In Table 3, the Charpy impact value is preferably 5.0 kJ/m2 or more, more preferably 25.0 kJ/m² or more.

Examples 3-1 to 3-2 and 3-7 correspond to Examples, and Examples 3-3 to 3-6 correspond to Comparative Examples.

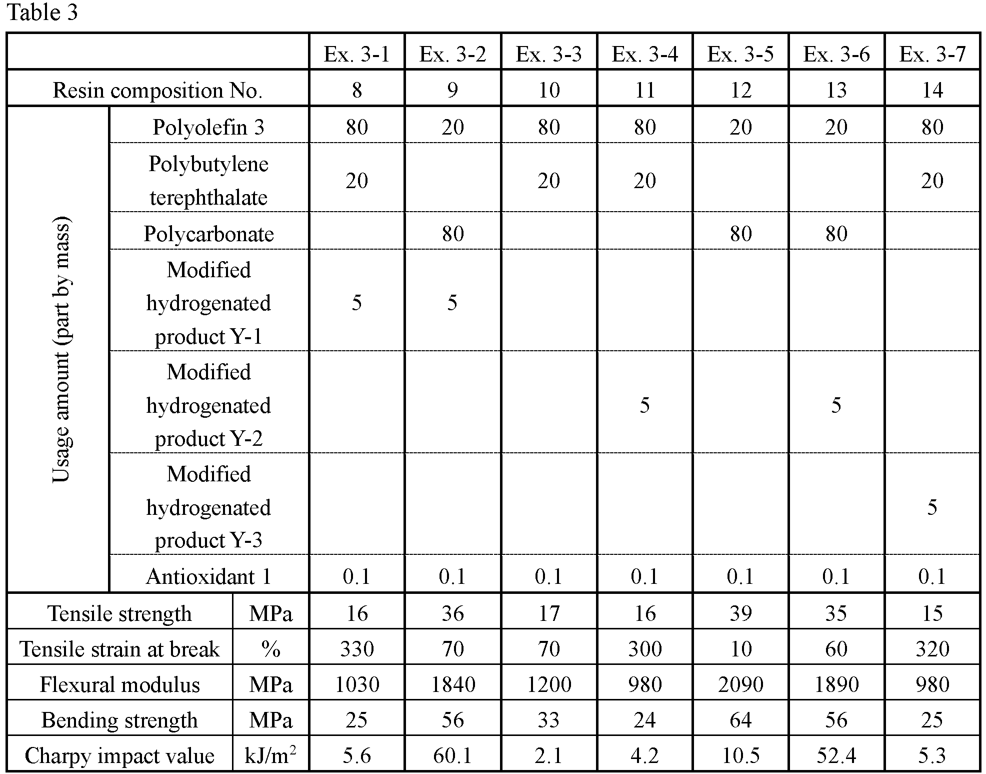

Even when the type of the polar resin was changed, a similar trend to that seen when polyamide was used was observed.

### [Examples 4-1 to 4-3]

With the blending shown in Table 4, resin compositions 15 to 17 were prepared by melt-kneading using the twin screw extruder "ZSK26mc" (26 mmϕ, LID = 56) manufactured by Coperion at a cylinder temperature of 230°C, a screw rotation of 300 rpm, and a discharge rate of 10 kg/h. Using the resulting resin compositions, an ISO multi-purpose A1 test piece was prepared under the conditions of a cylinder temperature of 230°C and a molding temperature of 80°C using the injection molding machine "EC-75 SX" manufactured by Toshiba Machinery Co., Ltd.

The components used to prepare each resin composition are as follows.

### [Modified Hydrogenated Product (A)]

- Modified hydrogenated product Y-1

### [Hydrogenated Product (A1)]

- Hydrogenated product Y'-1

### [Polyolefin-based Resin (B)]

- Polyolefin 1: Low density polyethylene ("Novatec LD LF443" (trade name, Novatec is a registered trademark), manufactured by Japan Polyethylene Corporation, melt index (MI) = 1.5 g/10 min)

### [Magnesium Hydroxide]

- Magnesium hydroxide: Magnesium hydroxide ("KISUMA 5P" (trade name), manufactured by Kyowa Chemical Industry Co., Ltd.)

### [Antioxidant]

- Antioxidant 1: Phenolic antioxidant ("ADEKA STAB AO-60" (trade name), manufactured by ADEKA Corporation)

The following physical properties were measured for the test pieces obtained from the resin compositions 15 to 17.

### <Tensile Strength and Tensile Strain at Break>

The tensile strength (MPa) and tensile strain at break (%) were measured under the conditions of a test speed of 50 mm/min, a distance between chucks of 115 mm, and a distance between gauge lines of 50 mm using Autograph AGX-V (manufactured by Shimadzu Corporation) in accordance with JIS K7161-1:2014 (ISO 527-1:2012). The measurement results are shown in Table 4.

In Table 4, the tensile strength is preferably 15 MPa or more, more preferably 17 MPa or more, and the tensile strain at break is preferably 50% or more, more preferably 200% or more.

### <Charpy Impact Value>

Both ends of the ISO multi-purpose test piece were cut to create a test piece with a length of 80 mm, a width of 10 mm, and a thickness of 4 mm, and a notch was cut in the center of the test piece to obtain a test piece with a remaining width of 8 mm. Using the above test piece, the Charpy impact value (kJ/m²) at 23°C was measured with a hammer load of 2 J using a digital impact tester model IT (manufactured by Toyo Seiki Seisakusho Co., Ltd.) in accordance with JIS K7111-1:2012. The measurement results are shown in Table 4.

In Table 4, the Charpy impact value is preferably 20.0 kJ/m2 or more, more preferably 25.0 kJ/m² or more.

### <Flame Retardancy>

Both ends of the ISO multi-purpose test piece were cut to produce a test piece with a length of 125 mm, a width of 10 mm, and a thickness of 4 mm.

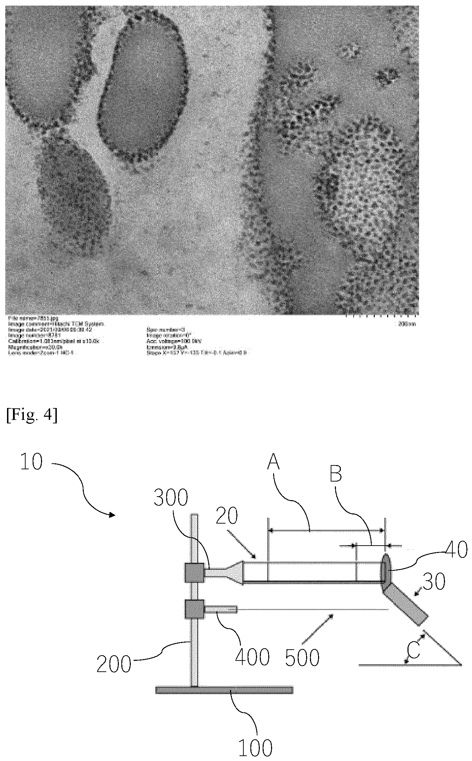

Subsequently, the prepared test piece was placed in a flame retardancy evaluation apparatus. Specifically, as shown in Fig. 4, a flame retardancy evaluation apparatus 10 includes a support member (metal pedestal) 100, a metal rod 200 erected on the support member (metal pedestal) 100, a first clamp 300 and a second clamp 400 fixed to the metal rod 200, and a metal container 500 held by the second clamp 400. The metal container 500 contains water. A prepared test piece 20 is held by the first clamp 300. In Fig. 4, A represents 100 ± 1 mm, B represents 25 ± 1 mm, and C represents approximately 30°.

The test procedure for flame retardancy evaluation is as follows.
(1) As shown in Fig. 4, a flame 40 from a burner 30 is brought in contact with the test piece 20 for 10 seconds.
(2) Next, the flame 40 is moved away from the test piece 20 and time measurement is started.
(3) Subsequently, the time until the combustion distance reached 25 mm was measured. The results are shown in Table 4. Here, if combustion stops before the combustion distance reaches 25 mm, it is considered "nonflammable".

The evaluation results are shown in Table 4.

In addition, in Table 4, flame retardancy is preferably 1 minute 30 seconds or more, and more preferably "nonflammable".

Examples 4-1 to 4-2 correspond to Examples, and Example 4-3 corresponds to Comparative Example.

**Table 4**

| | | | Ex. 4-1 | Ex. 4-2 | Ex. 4-3 |
|---|---|---|---|---|---|
| Resin composition No. | | | 15 | 16 | 17 |
| Usage amount (parts by mass) | Polyolefin 1 | | 49 | 28 | 49 |
| | Modified hydrogenated product Y-1 | | 21 | 12 | |
| | Hydrogenated product Y'-1 | | | | 21 |
| | Magnesium hydroxide | | 30 | 60 | 30 |
| | Antioxidant 1 | | 0.1 | 0.1 | 0.1 |
| Tensile strength | | MPa | 16 | 19 | 14 |
| Tensile strain at break | | % | 310 | 60 | 400 |
| Charpy impact value | | kJ/m² | 21.0 | 25.5 | 18.6 |
| Flame retardancy | | - | 1 min 57 sec | Nonflammable | 1 min 10 sec |

It can be seen from a comparison of the resin compositions 15 and 16 containing the modified hydrogenated product of the present invention with the resin composition 17 not containing the modified hydrogenated product of the present invention that, the resin compositions of Examples had an excellent balance of mechanical properties such as tensile strength, tensile strain at break, and impact resistance, and had improved flame retardancy. It is presumed that this is because the interfacial strength is improved due to the interaction between the modified hydrogenated product and magnesium hydroxide (filler), and magnesium hydroxide (filler) is more dispersed within the resin composition, resulting in the improved flame retardancy.

### Industrial Applicability

The resin composition containing the modified hydrogenated product of the present invention and a polyolefin-based resin, or a polyolefin-based resin and a polar resin, has an excellent balance of mechanical properties such as tensile strength, tensile strain at break, and impact resistance. Therefore, the modified hydrogenated product of the present invention can be suitably used when recycling various packaging containers in which a polyolefin-based resin and a polar resin are used.

## Claims

1. A modified hydrogenated product (A) of a block copolymer comprising a polymer block (A-1) containing a structural unit derived from an aromatic vinyl compound and a polymer block (A-2) containing a structural unit derived from a conjugated diene compound, wherein
the conjugated diene compound contains isoprene and a conjugated diene compound other than isoprene,
the polymer block (A-2) has a vinyl bonding amount of 30 mol% or less,
the modified hydrogenated product has one, or two or more functional groups selected from an alkoxysilyl group, a carboxy group, an amino group, a hydroxy group, an epoxy group, and an acid anhydride-derived group,
the modified hydrogenated product has a peak top intensity of loss tangent (tan δ) of 0.95 or less measured in accordance with JIS K7244-10:2005 under conditions of a strain amount of 0.1%, a frequency of 1Hz, a measurement temperature of -70°C to +120°C, and a heating rate of 3°C/min,
and the modified hydrogenated product has a melt flow rate (MFR) of 0.5 to 15 g/10 min measured in accordance with JIS K7210:2014 under conditions of a temperature of 230°C and a load of 21N.

2. The modified hydrogenated product (A) according to claim 1, having a weight average molecular weight of 10,000 to 400,000.

3. The modified hydrogenated product (A) according to claim 1 or 2, wherein the polymer block (A-2) has a hydrogenation rate of 80 mol% or more.

4. The modified hydrogenated product (A) according to any one of claims 1 to 3, wherein a content of the functional group is 0.1 to 5.0 phr based on the modified hydrogenated product (A).

5. The modified hydrogenated product (A) according to any one of claims 1 to 4, comprising a group derived from maleic anhydride.

6. The modified hydrogenated product (A) according to any one of claims 1 to 5, wherein the block copolymer further has a polymer block (A-3) containing a structural unit derived from isoprene, and
the block copolymer has a bonding form of a tetra block copolymer represented by A-B-A-C, when the polymer block (A-1) is represented by A, the polymer block (A-2) is represented by B, and the polymer block (A-3) is represented by C.

7. The modified hydrogenated product (A) according to claim 6, wherein the polymer block (A-3) in the block copolymer has a proportion of 40% by mass or less of the entire block copolymer.

8. The modified hydrogenated product (A) according to claim 6 or 7, wherein the polymer block (A-3) has a vinyl bonding amount of 2 to 90 mol%.

9. The modified hydrogenated product (A) according to any one of claims 6 to 8, wherein a content of structural units derived from isoprene in the polymer block (A-3) is 40% by mass or more based on a total mass of the polymer block (A-3).

10. The modified hydrogenated product (A) according to any one of claims 6 to 9, wherein the polymer block (A-3) in the modified hydrogenated product (A) has a hydrogenation rate of 80 mol% or more.

11. A pellet comprising the modified hydrogenated product (A) according to any one of claims 1 to 10.

12. A resin composition comprising the modified hydrogenated product (A) according to any one of claims 1 to 10 and a polyolefin-based resin (B).

13. The resin composition according to claim 12, wherein the polyolefin-based resin (B) is at least one resin selected from the group consisting of polypropylene, polyethylene, polymethylpentene, ethylene vinyl acetate copolymer, homopolymer or copolymer of α-olefin, and copolymer of propylene and/or ethylene with α-olefin.

14. The resin composition according to claim 12 or 13, wherein the modified hydrogenated product (A) in the resin composition has a content of 1 to 30% by mass.

15. The resin composition according to any one of claims 12 to 14, further comprising a polar resin (C).

16. The resin composition according to claim 15, wherein the polar resin (C) is at least one resin selected from the group consisting of a polyamide-based resin, a polyvinyl alcohol-based resin, a polyester-based resin, a polyphenylene ether-based resin, a polyphenylene sulfide-based resin, and a polycarbonate-based resin.

17. The resin composition according to claim 15 or 16, wherein, when a mass of the polyolefin-based resin (B) in the resin composition is X and a mass of the polar resin (C) in the resin composition is Y, X/Y is 90/10 to 10/90.
